# EUROPEAN PATENT SPECIFICATION

(11) **EP 1 102 486 B1**
(45) Date of publication and mention of the grant of the patent: **06.04.2005**
(21) Application number: 00310106.0
(22) Date of filing: 14.11.2000
(51) Int. Cl.: H04N 7/00, H04N 7/10, H04N 5/44, H04N 5/445, H04N 5/765, H04L 12/28

(54) **Network control system and controller and device used therein**
Netzwerk-Kontrollsystem und darin verwendeter Kontroller und Vorrichtung
Système de contrôle pour un reseau et contrôleur et dispositif utilisé là-dedans

(30) Priority: 16.11.1999 JP 32509499
(43) Date of publication of application: 23.05.2001
(73) Proprietor: MATSUSHITA ELECTRIC INDUSTRIAL CO., LTD., Kadoma-shi, Osaka 571-8501 (JP)
(72) Inventor: Yanagawa, Yoshifumi, Kyoto-shi, Kyoto 607-8345 (JP); Iitsuka, Hiroyuki, Katano-shi, Osaka 576-0033 (JP)
(74) Representative: Crawford, Andrew Birkby

(56) References cited:
- EP-A- 0 612 157
- EP-A- 0 810 739
- EP-A- 0 932 275
- DE-A- 4 218 125
- PATENT ABSTRACTS OF JAPAN vol. 1995, no. 03, 28 April 1995 (1995-04-28) & JP 06 351070 A (SONY CORP), 22 December 1994 (1994-12-22)

## Description

### FIELD OF THE INVENTION

The present invention relates to a network control system for controlling audio apparatus, video apparatus, information apparatus and others connected to a network by way of the network, and controllers and devices used therein.

### BACKGROUND OF THE INVENTION

Recently, a network control system for controlling a television and other apparatuses connected thereto through a network by displaying the functions of individual apparatuses on the television screen by using graphics including data and characters or icons and selecting them by remote control operation of the television, and a network control system for transmitting and receiving video and audio data by connecting a digital VTR or other digital apparatuses to the television by using a network control system or digital interface have been developed. The audio apparatus, video apparatus and information apparatus (hereinafter called AVC systems) controlled by such network control system are connected by serial buses capable of obtaining uniform opportunities of communication periodically in a two-way packet communication system. Therefore, it is no longer necessary to change over the connections of the apparatuses. A typical example of such serial bus is the digital interface of IEEE1394-1995 standard. In each AV apparatus, an appropriate data is selected among the data stored originally in the recording medium and transmitted to the controller according to the request from the television or personal computer playing the role of the controller having a graphic display screen. On the other hand, the controller has a function of requesting necessary screen display data, and a function of controlling the screen for displaying the data transmitted from the apparatus.

One of such conventional network control systems is disclosed in Japanese Laid-open Patent No. 9-149325. Or, in a conventional network control system using remote control which transmits a control signal to the controller, the controller compares the custom code included in the received signal with custom codes of apparatus on the network, and inserts the data included in the signal received from the remote controller into the transmission data packet, and then transmits the data packet to the apparatus coinciding in the custom code. That is, a certain apparatus is controlled by using the remote controller of other apparatus connected in the network. One of such network control systems is disclosed in Japanese Laid-open Patent No. 10-155188.

In such network control system, however, each apparatus is identified by using a custom code of the apparatus having a remote controller. This custom code is inserted in the transmission signal of the remote controller according to the signal standard. Therefore, if the apparatus at the signal receiving side does not conform to this standard, it fails to function normally, and it was difficult to control the apparatus appropriately.

EP-A-0 932 275 discloses a method and system for providing a device identification mechanism within a consumer electronics based audio/video network, utilising the home audio/visual initiative, or HAVI (RTM), architecture. Several consumer electronics products can be coupled within the network to commurticate together via a standard bus, such as an IEEE 1394 serial communication bus, and controlled using a base set of generic device controls.

### SUMMARY OF THE INVENTION

It is hence an object of the invention to present a network control system having the following functions, and a controller and a device used therein.
(1) Function of controlling the apparatuses connected to the network correctly if the remote controller specification or signal standard of each apparatus is different.
(2) Function of controlling the apparatuses connected to the network correctly from a remote controller if one operation part of the remote controller has plural functions depending on the operation time duration.

The object of the invention is achieved by composing the network control system as follows.
1. Comprising a controller having a remote controller, and an apparatus to be controlled (hereinafter called control object device).
   A predetermined duration is specified as transmission duration of message to be transmitted and received through a network transmission line by operation of the remote controller.
   The controller receives a signal transmitted by operation of remote controller, and, in the case the operation is an operation to be transmitted to the device, it converts the signal into a message including the information about this operation (hereinafter called operation information), and transmits to the control object device by judging and processing on the basis of the predetermined duration.
   This device operates according to the operation information obtained from the received message, on the basis of the predetermined duration.
2. The control object device presents its operation screen information to the controller, and the controller has a user interface for displaying the information.
3. Comprising a controller having a remote controller of which one operation part has plural functions depending on the operation duration, the control object device can execute one of the plural functions, depending on the operation information, on the basis of a predetermined duration.
4. The operation to the remote controller may include either "press" showing that the user has pressed an operation part of the remote controller, or "release" showing that it is released.
5. The operation information may include either "press" showing that the user has pressed an operation part of the remote controller, or "release" showing that it is released.
6. The operation information may be also composed to include information for specifying the operation part of the remote controller manipulated by the user (hereinafter called operation parts specifying information).
7. The predetermined duration may be set longer than the duration for determining the signal received from the remote controller (hereinafter called remote controller signal determining duration or determining duration).
8. The control object device may be also composed to determine the manipulation of the user on the basis of the predetermined duration.
9. The control object device may be also composed to determine whether the operation to the remote controller is a single press or a long press of the operation part on the remote controller on the basis of the predetermined duration.
10. The controller may be also composed to transmit plural messages to the control object device according to the operation to the remote controller, and determine the duration from the moment of receiving the response of the first message from the device until the second message is transmitted, as the predetermined duration.
11. If the remote controller signal determining duration is longer than the predetermined duration, the controller may be also composed to transmit the first message to the control object device after receiving the operation information from the remote controller, and transmit the second message to the device within the predetermined duration.
12. The controller may be also designed to judge whether or not to transmit the operation information received from the remote controller to the control object device, according to the operation parts specifying information, and create a message including the operation information when transmitting to this device.

Having such constitution, the invention brings about the following effects.
(1) If the product specification of the remote controller or the signal standard of each apparatus is different, the apparatus as control object connected on the transmission line can be controlled correctly.
(2) It is possible to control even in the case of the function not controllable by the remote control of the apparatus of the object of control, or the function not provided in the remote controller of the controller.

### BRIEF DESCRIPTION OF THE DRAWINGS

Fig. 1 is a block diagram of a controller in an embodiment of the invention.
Fig. 2 is a block diagram of a device in the embodiment of the invention.
Fig. 3 is a block diagram of the controller when handling stream data in the embodiment of the invention.
Fig. 4 is a block diagram of the device when handling stream data in the embodiment of the invention.
Fig. 5 is a network system configuration diagram ofAVC system in the embodiment of the invention.
Fig. 6 is an explanatory diagram showing operation of the controller in the embodiment of the invention.
Fig. 7 is an explanatory diagram showing operation of the device in the embodiment of the invention.
Fig. 8 is an explanatory diagram showing operation of the device when operated from the controller in the embodiment of the invention.
Fig. 9 is an explanatory diagram showing a design notice on the device in the embodiment of the invention.
Fig. 10 is a flowchart showing an example of operation of controller remote control operation determining means in the embodiment of the invention.
Fig. 11 is a flowchart showing an example of operation of controller remote controller data processing means in the embodiment of the invention.
Fig. 12 is a flowchart showing other example of operation of controller remote controller data processing means in the embodiment of the invention.
Fig. 13 is a flowchart showing flow of messages between the controller and device in the embodiment of the invention.
Fig. 14 is a composition diagram showing an example of operation screen information in the embodiment of the invention.
Fig. 15 is an explanatory diagram showing a display example of operation screen information in the embodiment of the invention.
Fig. 16 is an explanatory diagram showing flow of message and data between the controller and device in the embodiment of the invention.
Fig. 17 is an explanatory diagram showing other display example of operation screen information in the embodiment of the invention.
Fig. 18 is an explanatory diagram in the case of using a pointing device as the remote controller in the embodiment of the invention.
Fig. 19 is an explanatory diagram in the case of using GUI of controller as the remote controller in the embodiment of the invention.

### DESCRIPTION OF THE PREFERRED EMBODIMENTS

Preferred embodiments of a network control system of the invention, and a controller and a device used therein are explained below by referring to the accompanying drawings.

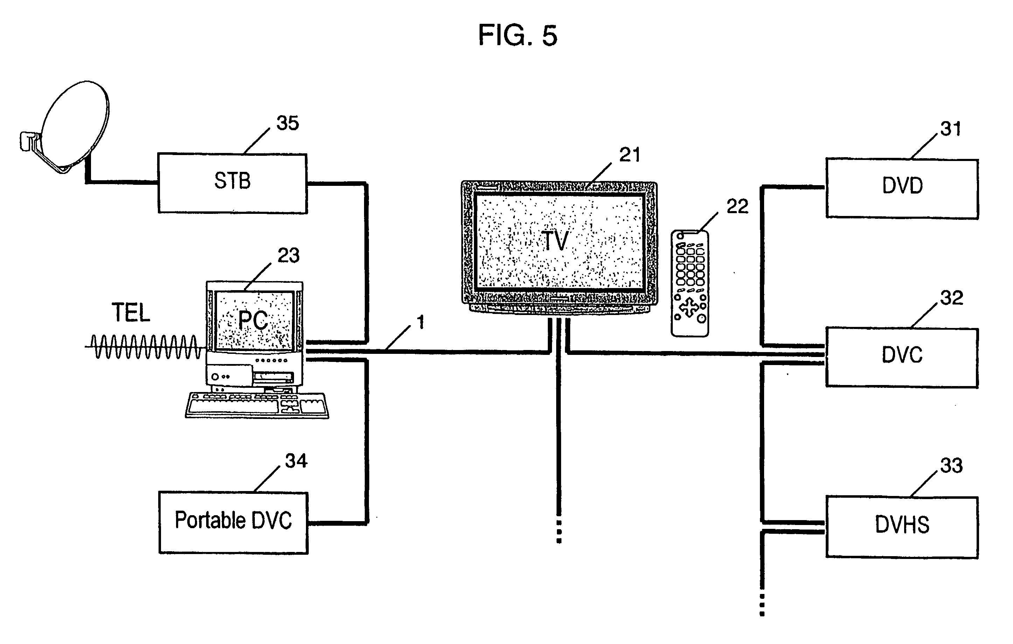

Network compositions of the AVC system using the network control system of the embodiments include, for example, the video, audio and information apparatuses (hereinafter merely called apparatuses or devices) as shown inn Fig. 5.

In the following description, the terms "apparatus" and "device" are distinguished, for example, "the apparatus includes a controller and a device."

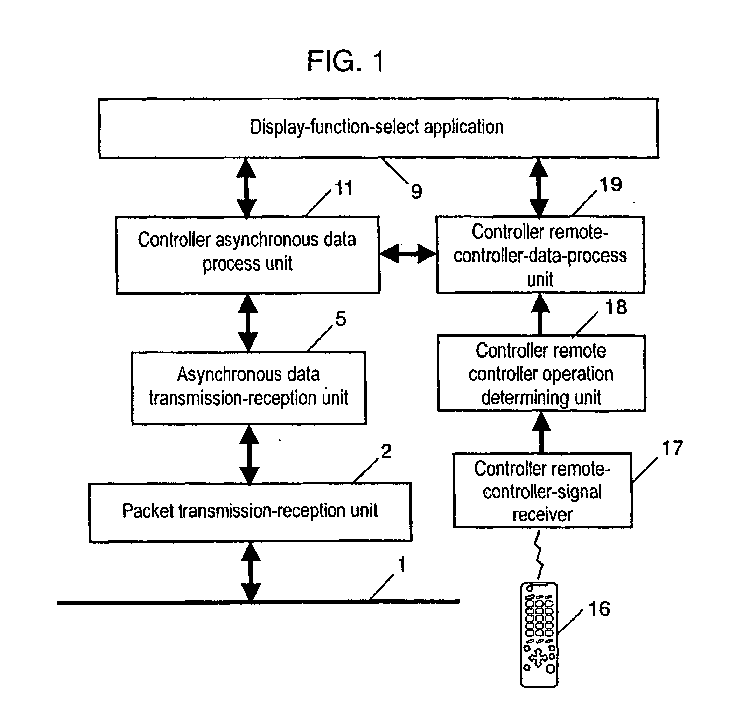

A television 21 is an apparatus comprising a controller and a device (terrestrial broadcast tuner, video monitor), and using a remote controller 22, the user gives an instruction to a display-function selection application 9 (described later) shown in Fig. 1. A personal computer 23 comprises a controller and a device (modem connected to a telephone line, video monitor, etc.), and gives an instruction to the application 9 from a user interface such as keyboard or mouse.

A digital video disk 31 and a digital video cassette camera 34 is a device having a recording and reproducing function of audio-video (AV) data. A digital video cassette tape recorder (DVC) 32 of digital video (DV) system and a digital VTR (DVHS) 33 of VHS system are devices having AV data recording and reproducing function and digital broadcast tuner function. A set top box (STB) 35 is a device having a communication satellite (CS) digital broadcast tuner function.

Herein, the television21 and personal computer 23 may be defined either as an apparatus integrating the controller and device, or as separate apparatuses.

Herein, the devices 31 to 35 are mere devices. However, if the devices 31 to 35 are capable of selecting functions of other devices by means of liquid crystal panel, touch panel or remote controller, they may be defined as the apparatus comprising both controller and device. Further, they may be also composed to have a processing function as controller and a remote controller, and to operate by remote controller while displaying video and audio only on the monitor by analog wiring or the like. In this case, too, such apparatus may be defined as an apparatus comprising both controller and device.

In short, one apparatus may comprise both controller and device, or may comprise either one of them.

In this invention, the device is the object to be controlled, and the controller controls this device as the object to be controlled. Further, the apparatus and device includes not only the existing video apparatus, audio apparatus and information apparatus such as printer and mini-disk, but also all other apparatus to be developed in future in the related fields. The apparatus and device correspond to one node on the transmission line, and plural nodes may be provided in one casing of the apparatus.

Fig. 1 is a block diagram of a controller in the embodiment. Each block is described below.
1. A controller remote controller 16 is a remote controller for the controller, and transmits the operation of the user to a receiver 17 in the controller by infrared ray, wireless, or wired means (for example, a bus conforming to RS232). Transmission of remote controller signal is not limited to transmission between one remote controller and one controller.
2. A controller remote controller receiver 17 receives data from the remote controller 16, and transmits to a determining unit 18. In this embodiment, the data transmission protocol of remote controller signal is different from the transmission protocol of the transmission line, but they may be also the same.
3. A controller remote controller operation determining unit 18 detects the operation information of the user, and transmits to a process unit 19. This operation information includes at least the action information showing which operation is manipulated by the user, and the operation parts specifying information showing which operation part, such as operation button, has been manipulated by the user.
4. A controller remote controller data process unit 19 receives the operation information by the user from the determining unit 18, and sends an instruction to the process unit 11 or application 9. First, the process unit 19 judges whether the operation information should be transmitted to the application 9 or to the device, on the basis of the setting of the application 9, according to the operation parts specifying information contained in the received operation information. In this case, the application 9 is set so as to transmit the operation information to the device as for some of the operation parts in the remote controllerl6, for example, up, down, right, left and select buttons, and to process within the application 9 itself as for others.
   This setting is determined depending on the type of the operation parts provided in the remote controller 16, the type of operation parts supported by the device, the GUI presented by the application on the controller, etc.
   The setting may be entered by the application 9 according to the instruction from the user through the GUI created by the controller, or by the message from other device.
   When transmitting the operation information to the application 9, the process unit 19 transmits the operation information to the application 9. On the other hand, when transmitting the operation information to the device, the operation parts specifying information and action information are transmitted to the process unit 11. In this case, the application 9 requests the process unit 11 to add a specific identification code (operation code) to this message (asynchronous data), and send out to the transmission line 1.
   Herein, the action information of the user consists of at least two actions, that is, "press" showing that the user has pressed an operation part and "release" showing that it is released, and the operation parts specifying information include at least five operation parts, that is, "up", "down", "left", "right", and "select."
   The operation parts specifying information may also include "1", "2", and "3" for instructing the channel number, "main menu" and "set menu" for selecting the operation screen, and "page up" and "page down" for instructing operation of the operation screen. The meaning of the operation parts may not be commonly specified, and depending on the operation screen displayed by the controller, for example, the "up" button may mean either upward move of the cursor, or increase of sound volume.
5. A transmission line 1 is a serial bus (1394 bus) specified in IEEE1394 standard (IEEE1394-1995 and compatible higher standard). This 1394 bus can transmit and receive synchronous data and asynchronous data by time sharing or other method. Synchronous data can be transmitted by using plural channels divided by time sharing or other method, and the band of each channel can be set individually. The transmission line 1 may be other transmission line such as other serial bus, ATM, Ethernet, or infrared ray transmission.
6. A packet transmission-reception unit 2 forms a physical and electrical interface with the transmission line 1, and arbitrates the right of use of the bus and controls the cycle for synchronous transfer. The transmission-reception unit 2 also selectively receives the packet on the transmission line 1 depending on the destination,, and transmits the packet to the transmission line 1.
7. An asynchronous data transmission-reception unit 5 processes transaction of asynchronous data conforming to the protocol of the transmission line 1, and for example in the case of 1394 bus, it processes read transaction, write transaction, and lock transaction, and further processes the transmission-reception protocol of asynchronous data. Some examples of transmission-reception protocol of asynchronous data such as message are FCP of AV protocol (IEC61883) standard and Audio/Video Control Digital Interface Command Set which is discussed at 1394 Trade Association (1394TA). This asynchronous data transmission-reception unit 5 may be also composed of software.
8. A controller asynchronous data process unit 11 operates as follows.
   (1) Asynchronous data such as message received from the transmission-reception unit 5 is processed, and transmitted to a proper constituent element in this controller.
   (2) When the controller supports a protocol of a large capacity transmission system, a plug showing logical or physical input or output port is set. In this case, the controller can efficiently receive asynchronous data of large capacity such as operation screen information by using the transmission-reception unit 5, aside from the message. An example of this system is AV/C Compatible Asynchronous Serial Bus Connections discussed at 1394TA.
   (3) From the packet transmission-reception unit 2, information of the device connected to the transmission line 1 such as connection of new device or removal of existing device, or information of operation screen of the device is received by way of the asynchronous data transmission-reception unit 5, and transmitted to the application 9.
   (4) On the basis of the instruction from the application 9 and instruction from the process unit 19, asynchronous data such as message is transmitted from the constituent element in the controller to the transmission-reception unit 5.

Usually, the message or the operation screen information of the device received by the large capacity data transmission system is displayed on the screen of the controller by the application 9. The controller may be also composed so as not to display operation screen information at all, and instead of the operation screen, for example, by using increase of sound volume or the change of stream data not containing operation screen information such as audio and video, the operation of the device can be noticed to the user.

The operation screen information is not required to be displayed always on the screen of the controller, and it may be instructed to be displayed by the controller or displayed by the device as required. Further, the operation screen information may be superposed on the stream data, or may be originally created by the controller. Further, the process unit 11 may be also composed as one unit each for the transmission-reception unit 5 or process unit 19.

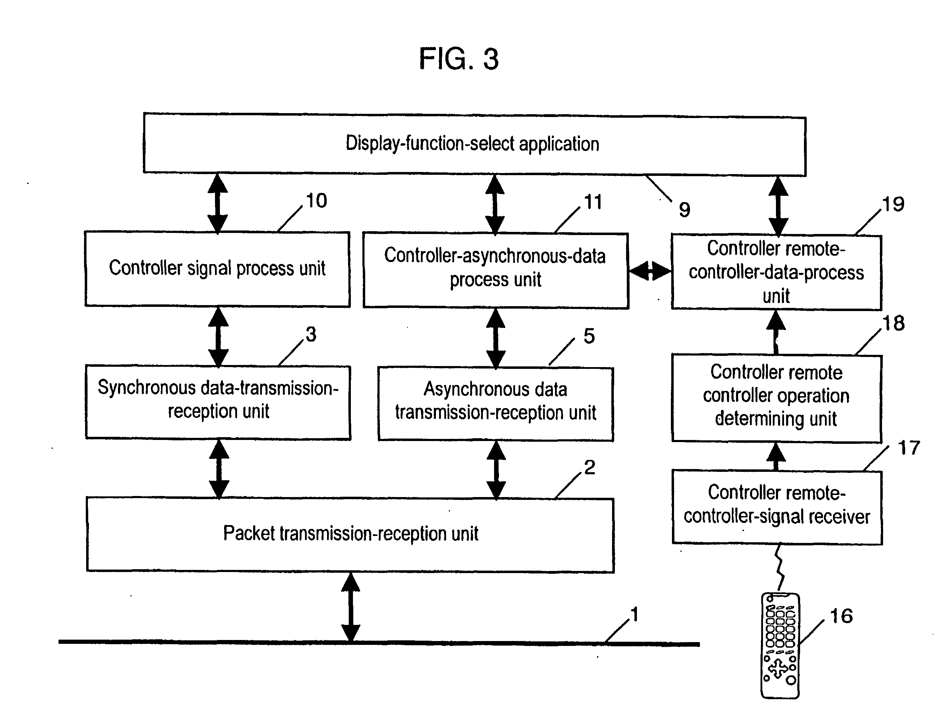

Fig. 3 is a block diagram of the controller of the embodiment when handling stream data such as video data or audio data. In Fig. 3, same constituent elements in Fig. 1 are identified with same reference numerals, and description is omitted.

The synchronous data transmission-reception unit 3 divides the data, controls the transfer rate, and adds the header when transmitting. For example, when using the AV protocol (IEC61883) standard of 1394 bus, a common isochronous packet (CIP) header is added in this transmission-reception unit 3. When receiving, to the contrary, the reception packets are shuffled in correct order, and the header is removed. A controller signal process unit 10 receives synchronous data from the transmission-reception unit 3, and processes signal depending on the controller. For example, if this controller is a video display apparatus such as video monitor, synchronous data (for example, stream of MPEG2) is decoded, and displayed on the screen by using the application 9.

The process unit 11, when the controller transmits stream data, holds and sets the band and channel for synchronous data in place of the device, and further sets the plug showing logical or physical input and output port of synchronous data as required, and the controller displays the stream data received from the device on the screen. In this case, the operation screen information may be superposed or not on the stream data. Therefore, the operation screen information presented by the device can be displayed on the controller screen, and the user can manipulate while observing the screen. For example, the user can instruct even in the case of the function that can be manipulated only from the front panel of the control object device and cannot be manipulated from the remote controller, or the function having no operation parts in the controller remote controller.

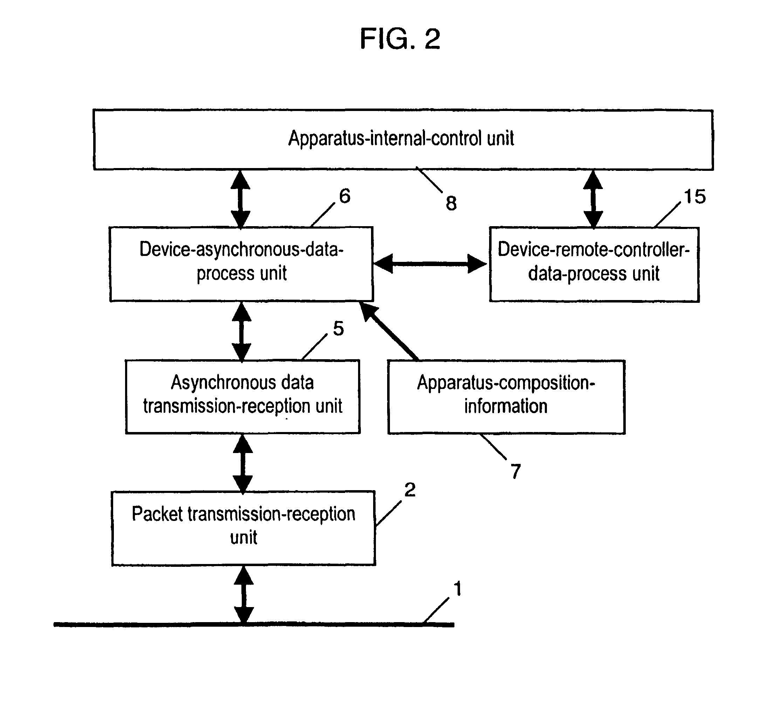

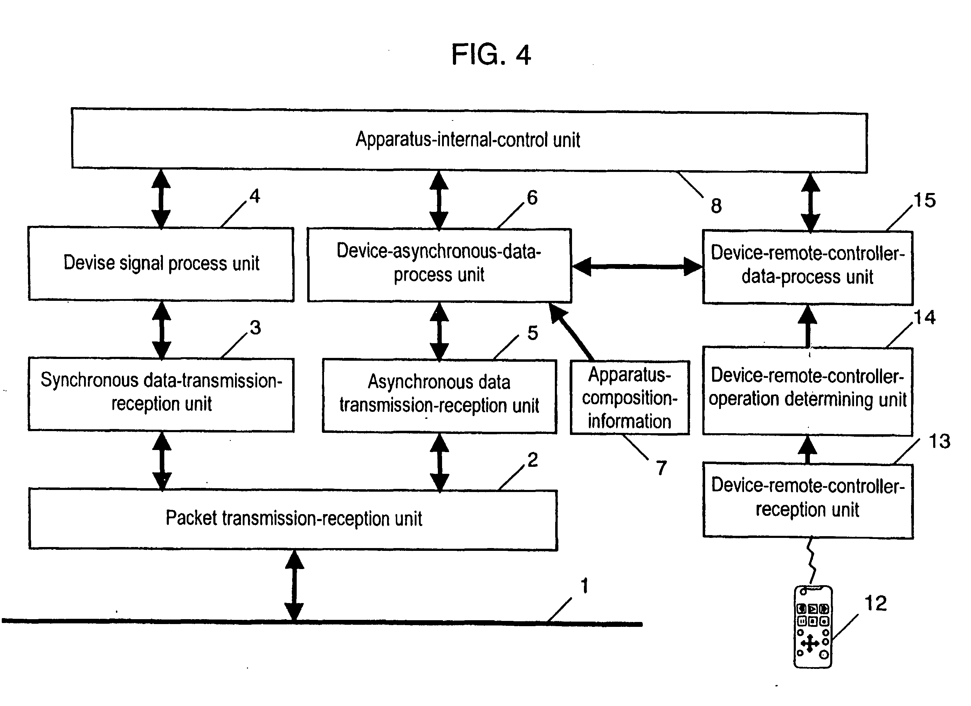

So far, the controller of the embodiment is described, and the device is described below. Fig. 2 is a block diagram of the device according to the embodiment. In Fig. 2, same constituent elements as in Fig. 1 are identified with same reference numerals, and description is omitted.
1. A device asynchronous data process unit 6 operates as follows.
   (1) Asynchronous data received from the asynchronous data transmission-reception unit 5 is processed, and transmitted to an appropriate constituent element in this device. For example, when the asynchronous data received by the process unit 6 includes a specific identification code (operation code), the process unit 6 recognizes the content of this asynchronous data, and transmits the operation information to the device remote controller data process unit 15. The process unit 15 gives an instruction to the process unit 6 so as to transmit a response message corresponding to the received operation information, and, receiving it, the process unit 6 creates a response message, and sends out the response message to the transmission line 1 by way of the transmission-reception unit 5. Herein, as far as the control object device is not reserved from other controller than the controller having transmitting this asynchronous data and this operation information is supported, the process unit 15 gives an instruction to the process unit 6 so as to return the acceptance response to the controller. This acceptance response only shows that the device has received the operation information from the controller, not inquiring whether or not to operate according to the operation information. Thus, if the operation is invalid, since the device does not operate, so that the user recognizes that it is invalid, and has the same sensation of operation as in the remote controller of the conventional apparatus. As for the asynchronous data having other identification codes, the process unit 6 judges the validity, and if valid, the execution of the indicated function is instructed to the apparatus internal control unit 8.
   (2) When the controller requests apparatus composition information 7 showing a constituent element of the apparatus, depending on the request received through the transmission-reception unit 5 or the like, the information stored in the apparatus composition information 7 is sent out to the controller by way of the transmission-reception unit 5 or the like. Further, the process unit 6, when the operation screen information of this device is requested from the controller, sends out the operation screen information created or held in the control unit 8 to the controller by way of the transmission-reception unit 5 or the like, according to the request received by way of the transmission-reception unit 5 or the like.
   (3) According to the instruction from the control unit 8, the asynchronous data is also sent out to the transmission-reception unit 5 from the constituent element in the device. For example, according to the instruction from the control unit 8, the device sends out, by it self, the operation screen information to the controller.
   (4) When supporting other protocol of large capacity transmission system than the transmission of message, the plug showing logical or physical input and output port used in this system is also set. Incidentally, the device asynchronous data process unit 6 may be also composed as one part of device remote controller data process unit 15 or asynchronous data transmission-reception unit 5. The operation screen information is explained as being transmitted as asynchronous data, but it may be also superposed on the stream data, and sent out to the controller as synchronous data.
2. The method of description of the apparatus composition information 7 may conform to the rule of, for example, configuration ROM of the command and status registers (CSR) architecture specified in ISO/IEC13213-1994 standard. When using the 1394 bus in the transmission line 1, this information 7 includes, for example, (i) the information of the bus showing whether the bus manager or isochronous operation is supported or not in which the apparatus manages, (ii) the unit directory including the information showing whether the AV protocol is supported or not, and (iii) the unique ID which is the identification information of this apparatus.
3. The apparatus internal control unit 8 has the information for composing the operation screen of the device. The operation screen information of this device may be either screen bit map composed of entire screen or part of image, or stream data such as video moving image. This operation screen information may be display data composed of an object necessary for device operation, and identification information (such as ID) of this object. Such operation screen information is transmitted to the controller in various proper methods. For example, in the case of display data composed of screen bit map or object, a connection for large capacity data transmission is set preliminarily between the plug of the controller and the plug of the device, and the screen bit map is transmitted onto this connection by using the large capacity data transmission system. In the case of stream data, the connection for synchronous data is set preliminarily, and the stream is transmitted onto this connection. The operation screen information of the device may be transmitted by using the message. Or the device may not have operation screen information, and may be composed not to transmit operation screen information at all to the controller. The controller and device are described above by referring to Fig. 1 and Fig. 2, and the remote controllers 16 and 12, the remote controller reception units 17 and 13 (see Fig. 4), the remote controller operation determining units 18 and 14, the remote controller data process units 19 and 15, and the asynchronous data process unit 11 and device asynchronous data process unit process similarly. Therefore, each pair can be expressed in the same construction.

Fig. 4 is a block diagram of the device of the embodiment when handling stream data such as video data and audio data. In Fig. 4, same constituent elements as in Fig. 1 and Fig. 3 are identified with same reference numerals, and description is omitted.

A device signal process unit 4 receives synchronous data from a synchronous data transmission-reception unit 3, and processes the data depending on the device. For example, if this device is a recording and reproducing apparatus such as digital VTR, the synchronous data is recorded in a recording medium (for example, magnetic tape). A process unit 4 takes out synchronous data from the recording medium or broadcast wave, and sends to the transmission-reception unit 3. A device asynchronous data process unit 6 not only holds and sets the band and channel for synchronous data, but also sets the plug showing logical or physical input and output port of the synchronous data as required. Therefore, the device can present the stream data to the controller.

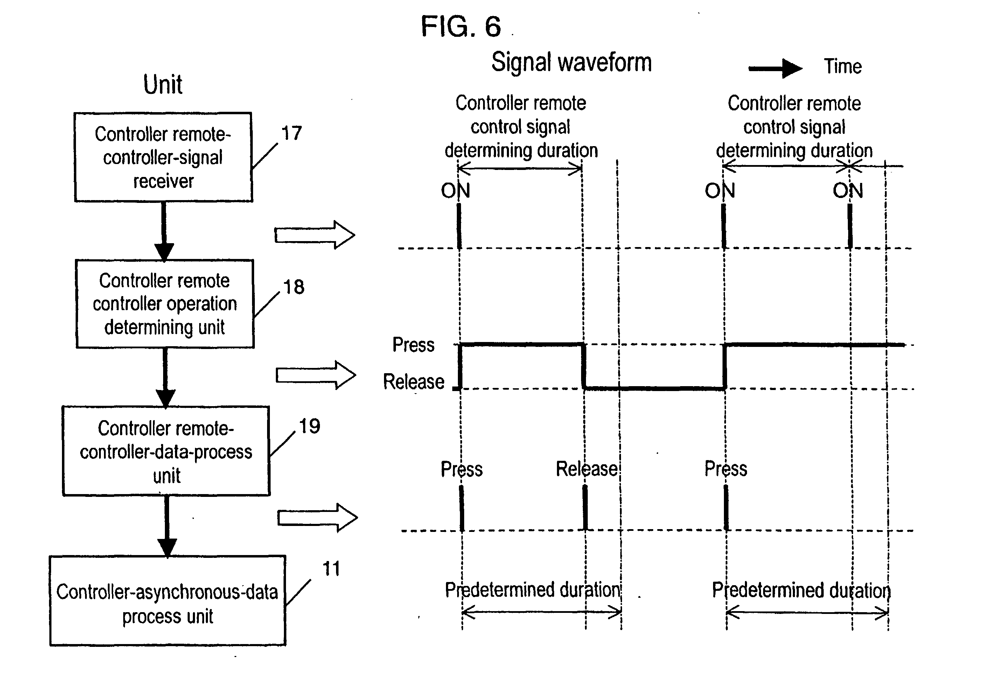

Fig. 6 is an explanatory diagram showing the operation of the controller when a specified duration is set. In Fig. 6, same constituent elements as in Fig. 1 are identified with same reference numerals.

In Fig. 6, a controller remote controller reception unit 17 receives a signal from the controller remote controller 16, and sends to a determining unit 18. Herein, the infrared ray signal from the remote controller 16 is composed of operation information of the user, and is the information showing the type of the operation parts (such as button) on the remote controller 16 manipulated by the user, and also an "on" signal showing that the user is pressing the operation part (for example, button), in every duration, while the user is pressing the operation part. In this embodiment, the duration of continuous transmission of "on" signal by the remote controller is called the controller remote controller signal transmission duration, and the duration of checking the operation information from the remote controller by the remote controller operation determining unit is called the controller remote controller signal determining duration. Meanwhile, in the embodiment, in the controller and device, it is explained that the remote controller signal transmission duration, and the remote controller signal determining duration are equal to each other, but they are not required to be equal. In the case of the controller, the transmission duration and the determining duration are originally determined by the controller, and are not always same as the transmission duration and the determining duration of other controller or device. However, in the embodiment, the controller remote controller signal determining duration is set so as not to exceed a predetermined duration.

The controller remote controller operation determining unit 18 has a time counter function for measuring the time, and determines the operation of the user in every remote controller determining duration. First, the operation determining unit 18, when receiving an "on" signal corresponding to a certain operation part (for example, a button) from the reception unit 17, determines from this signal which operation part of the remote controller 16 has been pressed, and transfers the state of this operation part from "release" to "press", thereby transmitting this state change to the process unit 19. Within a specified determining duration after a certain "on" signal, if next "on" signal is not coming, the determining unit 18 determines that the user has released this operation part on the controller remote controller 16, and changes the state of this operation part from "press" to "release", thereby transmitting to the process unit 19. When a next "on" signal comes in the determining duration, the determining unit 18 determines that the user is keeping pressing this operation part on the controller remote controller 16, and holds the "press" state, thereby transmitting to the process unit 19. The determining unit 18 may be designed to determine "press" or "release" with a certain time allowance over the "on" signal transmission duration of the controller remote controller 16. This duration is preferred to be, however, shorter than the predetermined duration. After the determining unit 18 has determined "release," the duration until next "press" is determined depends on the will of the user when to manipulate the controller remote controller, and is hence indifferent to the determining duration.

The controller remote controller data process unit 19 acquires the operation parts specifying information for specifying the operation part manipulated by the user, and the information showing the state of this operation part (hereinafter called state information) from the determining unit 18, and judges whether or not to process the operation by the user on this operation part in the controller. This judgement is made by using an operation parts list table showing whether to process in the controller in every operation part, or to transmit to the object device. When processing in the controller, the process unit 19 transmits the operation parts specifying information and the state information of the operation part to the application 9. On the other hand, when transmitting to the control object device, the identifier of the device to be transmitted, the operation parts specifying information, and the latest state information of the operation part are transmitted to the process unit 11 every time the state of the operation part is changed, requesting the device to issue a message. This table is set by the application 9, and may include the identifier showing the device at the destination of transmission of operation information, and not limited to every operation part, the transmission destination of the operation information may be composed in every group, for example, by assembling "up", "down", "left", "right", and "select" into one group. This table may be also set from outside of the controller by means of the controller asynchronous data process unit 11.

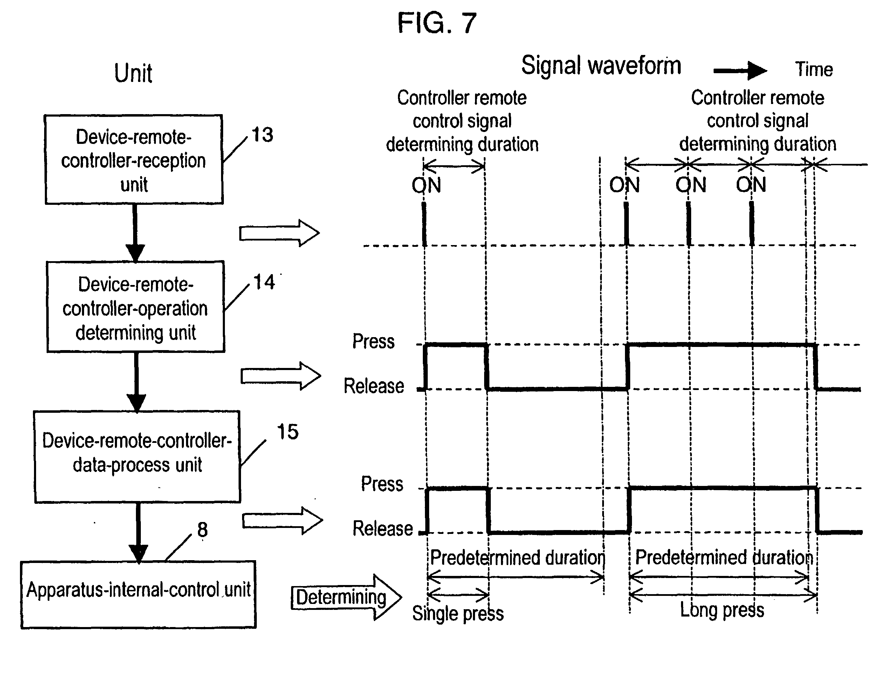

Fig. 7 is an explanatory diagram showing operation of the device in the embodiment when the device receives operation information from the device remote controller. In Fig. 7, same constituent elements as in Fig. 4 are identified with same reference numerals.

A device remote controller reception unit 13 receives a signal from a device remote controller 12, and sends it to a device remote controller operation determining unit 14. The signal from the remote controller 12 is composed of the user's operation information, and together with the operation parts specifying information of the remote controller 12, the "on" signal showing the user is pressing the operation part is sent to a reception unit 13 in every specific duration while the user is pressing the operation part. Herein, the remote controller signal transmission duration of the device and the remote controller signal determining duration of the device are defined same as in the case of the controller. The remote controller signal determining duration of the device is originally determined at the device side, and is not always same as the remote controller signal determining duration of other controller or device, but it is set at least smaller than the predetermined duration. The remote controller 12 transmits signal by infrared, wireless or wired means, and such means and transmission method may be different from those of the controller.

The device remote controller operation determining unit 14 has a time counter function for measuring the time, and determines the operation of the user in every remote controller signal determining duration. First, the determining unit 14, when receiving an "on" signal from the reception unit 13, determines from this signal which operation part of the remote controller 12 has been pressed, and transfers the state of this operation part from "release" to "press", thereby transmitting this state change to a device remote controller data process unit 15. Within a specified determining duration after a certain "on" signal, if next "on" signal is not coming, the determining unit 14 determines that the user has released this operation part on the remote controller 12, and changes the state of this operation part from "press" to "release", thereby transmitting to the process unit 15. When a next "on" signal comes in the determining duration, the determining unit 14 determines that the user is keeping pressing this operation part on the remote controller 12, and holds the "press" state, thereby transmitting to the process unit 15. The determining unit 14 may be designed to determine "press" or "release" with a certain time allowance over the "on" signal transmission duration of the remote controller 12. After the determining unit 14 has judged "release," the duration until next "press" is judged depends on the will of the user when to manipulate the controller remote controller, and is hence indifferent to the determining duration.

The device remote controller data process unit 15 acquires the operation parts specifying information and the state information of the operation part from the determining unit 14, and determines whether or not to process the operation by the user on this operation part in the device. This judgement is made by using an operation parts list table showing whether to process in the device in every operation part, or to transmit to the object device. When processing in the device, the process unit 15 transmits the operation parts specifying information and the state information of the operation part to the apparatus internal control unit 8. The control unit 8 receives them and operates according to the received information. This operation is execution of device function such as play and stop, various settings of the device such as channel setting, and change of operation screen information of the device such as move of cursor. Herein, the control unit 8 judges whether the operation part is a single press or a long press, on the basis of the determining duration. That is, if the "press" state of the operation part is within the determining duration, it is regarded as a single press, and the operation of single press is executed, and if longer than the determining duration, it is judged as a long press, and the operation of long press is executed. This determining duration is set equal to or longer than the predetermined duration. Therefore, by setting the determining duration of the device remote controller shorter than the predetermined duration, even in the case of a signal from the device remote controller, the device can correctly judge a single press, and the desired operation of the user can be realized. On the other hand, when transmitting to the other device, the identifier of the device to be transmitted, the operation parts specifying information, and the latest state information of the operation part are transmitted to the process unit 6 every time the state of the operation part is changed, requesting the device to issue a message.

This operation parts list table is set by the control unit 8, but may be also set from outside of the device by means of the process unit 6. The table may include the identifier showing the device at the destination of transmission of operation information of the operation part, and not limited to every operation part, the transmission destination of the operation information may be composed in every group, for example, by assembling "up", "down", "left", "right", and "select" into one group.

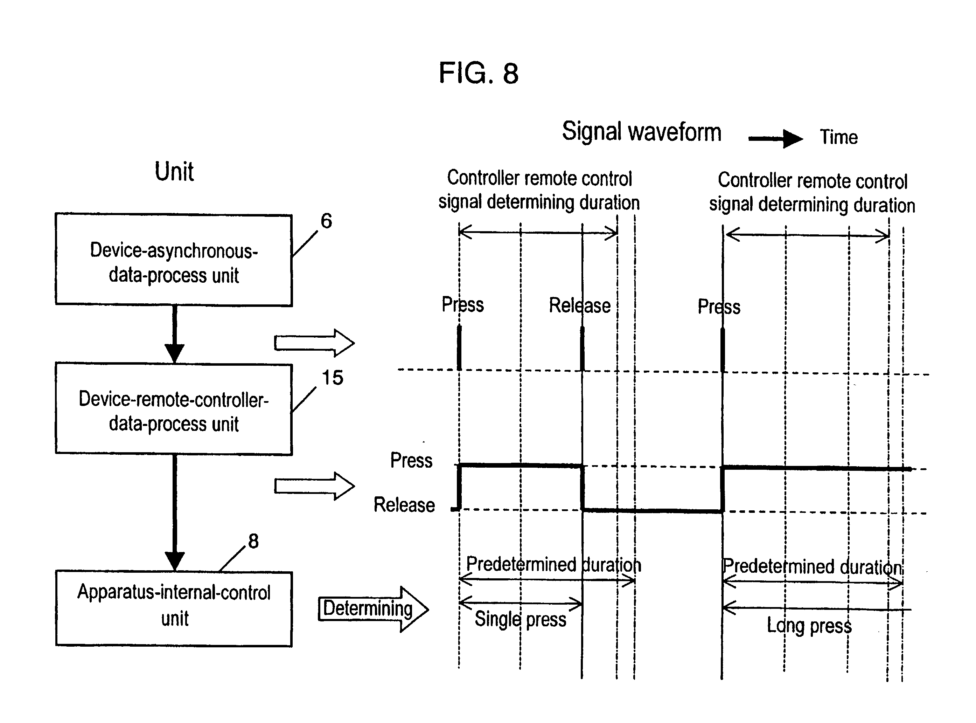

Fig. 8 is an explanatory diagram showing operation of the device in the embodiment when the device receives remote controller operation information from the controller. In Fig. 8, same constituent elements as in Fig. 4 are identified with same reference numerals.

When a device asynchronous data process unit 6 receives the operation executed in the controller remote controller 16 (see Fig. 1) as the message from the transmission line 1, the process unit 6 transmits the operation information included in this message to a process unit 15.

The device remote controller data process unit 15 specifies the operation part from this operation information, and detects the state of the operation part. The process unit 15, when receiving the operation information including "press" from the process unit 6, sets this operation part in "press" state, and when receiving the operation information including "release", this operation part is set in the "release" state. In this case, after the "press" signal, if "release" signal is not coming within a specific time-out duration, it is assumed that the "release" message is lost in the transmission line 1 or the like, and the operation part is set in "release" state. Therefore, when instructing, for example, sound volume up/down by the controller remote controller 16, the volume is not increased excessively, and malfunction can be prevented. While the user is keeping pressing the controller remote controller 16, the controller transmits the message including the operation information showing "press" to the device successively within the time-out duration. The time-out duration is set longer than the predetermined duration.

An apparatus internal control unit 8 receives the operation parts specifying information and state information from the process unit 15, and operates according to them. Herein, the control unit 8 judges whether the operation part is a single press or a long press, on the basis of the determining duration. That is, if the "press" state of the operation part is within the determining duration, it is regarded as a single press, and the operation of single press is executed, and if longer than the determining duration, it is judged as a long press, and the operation of long press is executed. This determining duration is set equal to or longer than the predetermined duration. For example, the sound volume is increased by one step by a single press, and the sound volume is increased continuously by a long press, or the operation of a single press is continuous high speed reproduction, and the operation of a long press is high speed reproduction only while the operation part is being pressed. Therefore, in the case of a single press, by setting the message issue duration of the controller within the predetermined duration, the device can correctly judge a single press, and the desired operation of the user can be realized. Further, the user can handle the remote controller of the controller in the same sense as when using the remote controller of the device to be controlled.

In Fig. 6, Fig. 7, and Fig. 8, a single press is judged by one "on" signal from the controller remote controller and device remote controller, but a single press may be judged by plural "on" signals, and in this case the same effects are obtained by setting a predetermined duration. The operation parts are not limited to the buttons of the remote controller, but may include the slider, dial, track ball and others, and the same effects are obtained by providing such operation parts with action information specifying the moving direction or move start/stop. The signal transmission system from the remote controller to the controller or device is arbitrary as far as the user's operation information (action information and operation parts specifying information) can be noticed.

Relating to the operation of the device of the embodiment described so far, a design notice is briefly explained below.

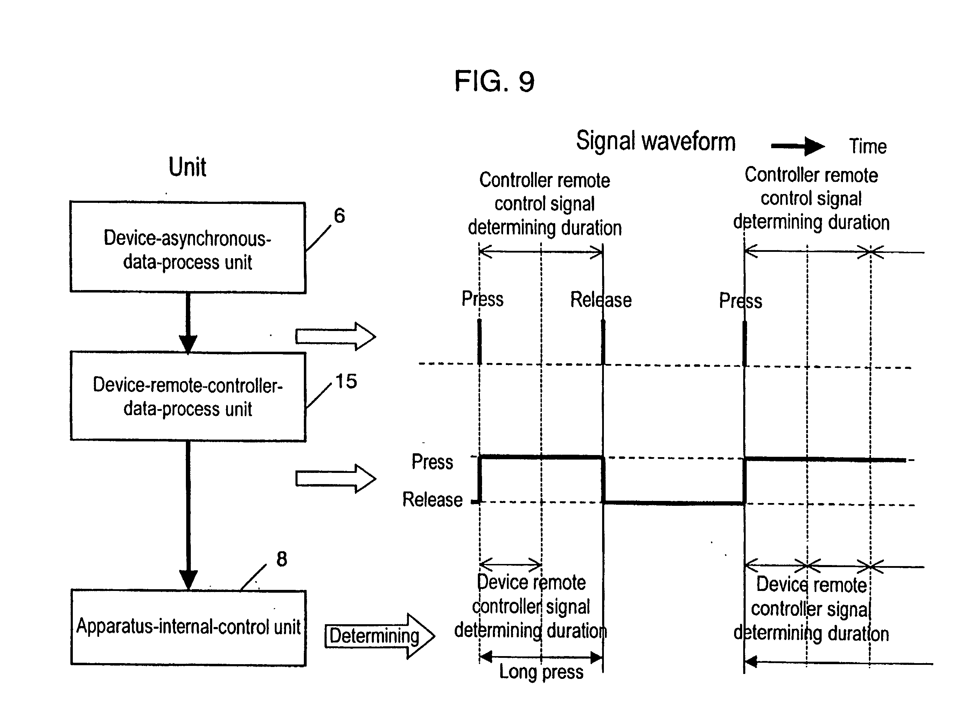

Fig. 9 shows the operation of the device when the device receives remote controller operation information from the controller. In Fig. 9, same constituent elements as in Fig. 8 are identified with same reference numerals. The device remote controller data process unit 15 receives a message from the device asynchronous data process unit 6 through the transmission line 1, specifies the operation part by the operation information included in this message, and detects the state of this operation part. Herein, when receiving the operation information of the user including "press" from the process unit 6, this operation part is set in "press" state, and when receiving the operation information of the user including "release", this operation part is set in "release" state. The apparatus internal control unit 8 receives the operation parts specifying information and state information from process unit 15, and operates according to them.

If the message issue duration of the controller is longer than the determining duration for judging single press or long press of the device; the device judges long press in spite of single press of the operation part, and the operation corresponding to long press of the operation part is executed. As explained in the embodiment in Fig. 8, such undesired operation can be eliminated by setting a predetermined duration.

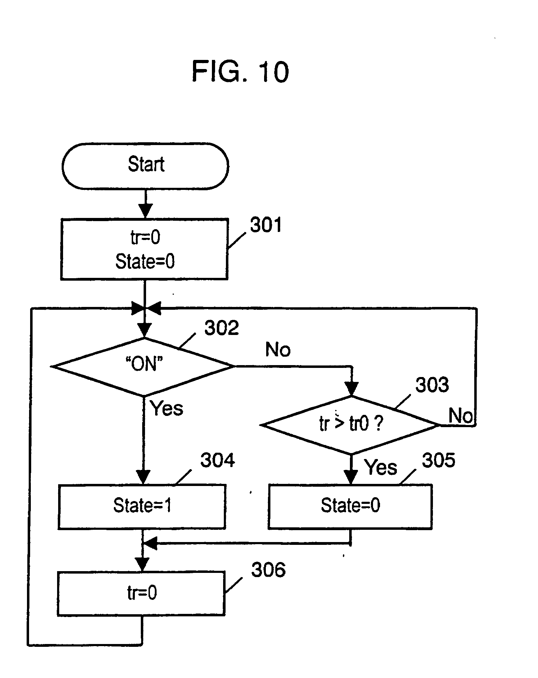

Fig. 10 is a flowchart showing an example of operation of the controller remote controller operation determining unit in the embodiment. However, the terminating process of the determining unit and the operation parts specifying information handled herein are omitted.

At step 301, the controller remote controller operation determining unit 18 initializes the variables. Herein, "tr" is the time counter value, which is initialized to 0. This value increases with the lapse of time, and is used for measuring the duration until the user releases the operation part. Further, State shows the state of this operation part, and in the case of State=1, it shows the operation part is being pressed, and in the case of State=0, the operation part is released.

At step 302, the input from the controller remote controller reception unit 17 is checked. When an "on" input is given from reception unit 17, at step 304, State is set to 1, and this operation part is set in "press" state. If "on" input is not coming, the expiration of time is judged at step 303.

At step 303, judging if the time counter value at this moment is larger than the determining duration tr0 or not, if smaller, the process returns to step 302. If the time counter value "tr" is greater than tr0 at step 303, State is set to 0 at step 305, and this operation part is set in "release" state.

After step 304 and step 305, the time counter value "tr" is set to 0 at step 306, and the process returns to step 302. The flowchart shown in Fig. 10 is only an example, and the operation of the controller remote controller operation determining unit 18 may be also realized by other method.

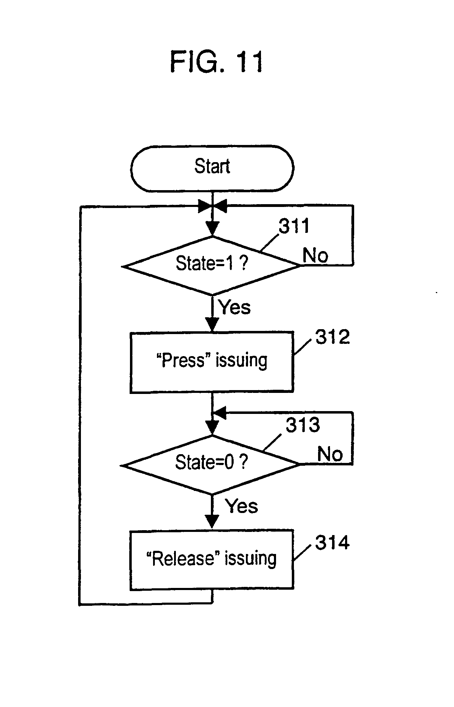

Fig. 11 is a flowchart showing an example of operation of the controller remote controller data process unit in the embodiment. However, the terminating process of the process unit and the operation parts specifying information handled herein are omitted.

At step 311, the controller remote controller data process unit 19 waits until the state information (State) of the operation part entering from the determining unit 18 becomes 1 ("press"). After the state information of the operation part becomes "press", at step 312, as the operation information of the user, the message including "press" and operation parts specifying information is issued, and it is requested to the controller asynchronous data process unit 11 to transmit it.

At step 313, the process unit 19 waits until the state information (State) of the operation part entering from the determining unit 18 becomes 0 ("release"). After the state information of the operation part becomes "release", at step 314, the message including "release" and operation parts specifying information is issued as the operation information of the user, and it is requested to the process unit 11 to transmit it. Going back to step 311, the same process is repeated. However, when the state of the operation part is changed, the sum of the error of processing time of the process unit 19, error of processing time of the determining unit 18, and controller remote controller signal determining duration is required to be set smaller than the predetermined duration.

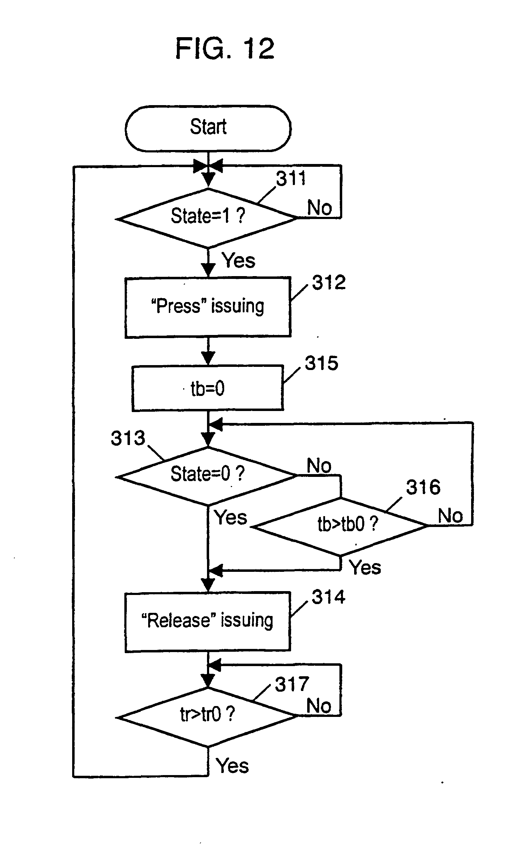

Fig. 12 is a flowchart showing other example of operation of the controller remote controller data process unit in the embodiment, and it is valid when the duration between the messages including the information showing "press" and "release" may exceed the predetermined duration. However, the terminating process of the process unit and the operation parts specifying information handled herein are omitted. Same constituent elements as in Fig. 11 are identified with same reference numerals.

At step 311, the process unit 19 waits until the state information (State) of the operation part entering from the determining unit 18 becomes 1 ("press"). After the state information of the operation part becomes "press", at step 312, as the operation information of the user, the message including "press" and operation parts specifying information is issued, and it is requested to the controller asynchronous data process unit 11 to transmit it. Then, at step 315, the value "tb" of the time counter is set to 0. This value of the time counter increases with the lapse of time, and is used herein for measuring the message issue duration.

At step 313, the process unit 19 checks if State is 0 ("release") or not. If State is not 0, at step 316, it is checked if the value "tb" of the time counter is longer than the predetermined duration tb0 or not. At step 316, if the value "tb" of the time counter is shorter than or equal to the predetermined duration tb0, going back to step 313, the same process is repeated. When State is 0 ("release") at step 313, or if the value "tb" of the time counter is longer than the predetermined duration tb0 at step 316, the process goes to step 314.

At step 314, it is requested to the process unit 11 to transmit the message including "release" and operation parts specifying information as the operation information of the user. At step 317, waiting until the value "tr" of the time counter becomes larger than the controller remote controller signal determining duration, and going back to step 311, this process is repeated.

By thus composing the process unit 19, as the operation information of the user, after the message including "press", the message including "release" can be transmitted within the predetermined duration, and if the sum of the error of processing time of the process unit 19, error of processing time of the determining unit 18, and controller remote controller signal determining duration is about to exceed the predetermined duration, or if the controller remote controller signal determining duration becomes larger than the predetermined duration due to the feature of the design, the desired operation can be executed. Therefore, the device can correctly judge a single press which is often more important than the long press in operation.

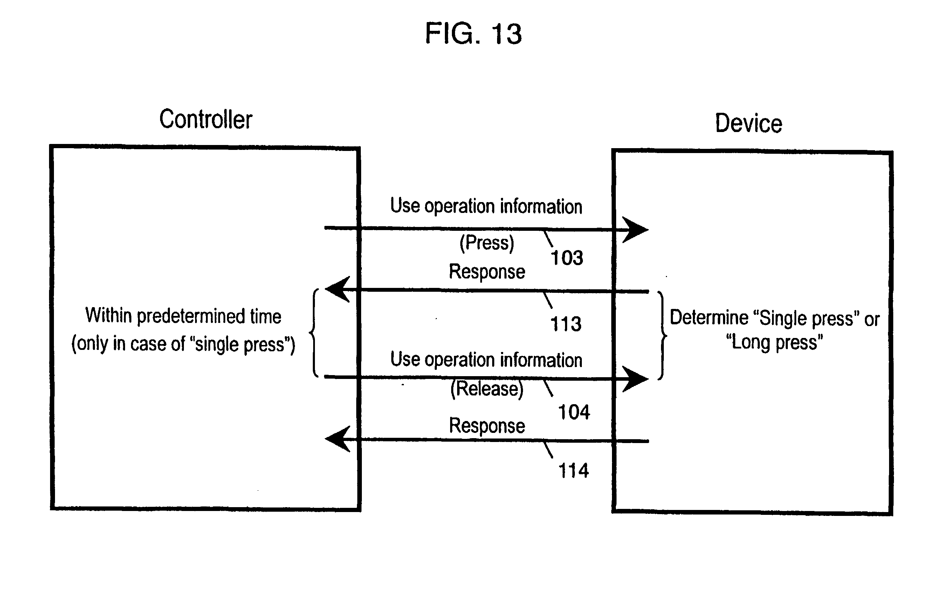

Fig. 13 is an explanatory diagram showing the message between the controller and the device in the embodiment.

In Fig. 13 and Fig. 1, when an operation part on the controller remote controller 16 is pressed by the user, the controller transmits a message 103 to the transmission line, according to the instruction of data process unit 19, by using data process unit 11, transmission-reception unit 5, and packet transmission-reception unit 2. This message 103 includes the operation parts specifying information and the state information showing "press" operation of the operation part as the operation information of the user. When the device receives this message 103, a response 113 to this message 103 is returned to the controller. When the operation part on the remote controller 16 is released, similarly, the controller transmits a message 104 to the transmission line through the process unit 11 on the basis of the instruction of the process unit 19. When the device receives this message 104, a response 114 corresponding to this message 104 is returned to the controller. When the user press the operation part once, the controller receives the response 113, and transmits the message 104 within the predetermined duration. Further, the device transmits the response 113, and judges whether single press or long press by the determining duration longer than the predetermined duration. Although the response of the message to the packet is omitted, it may be also composed so as to transmit the response packet showing whether received normally or not, to the messages 103, 113, 104, 114.

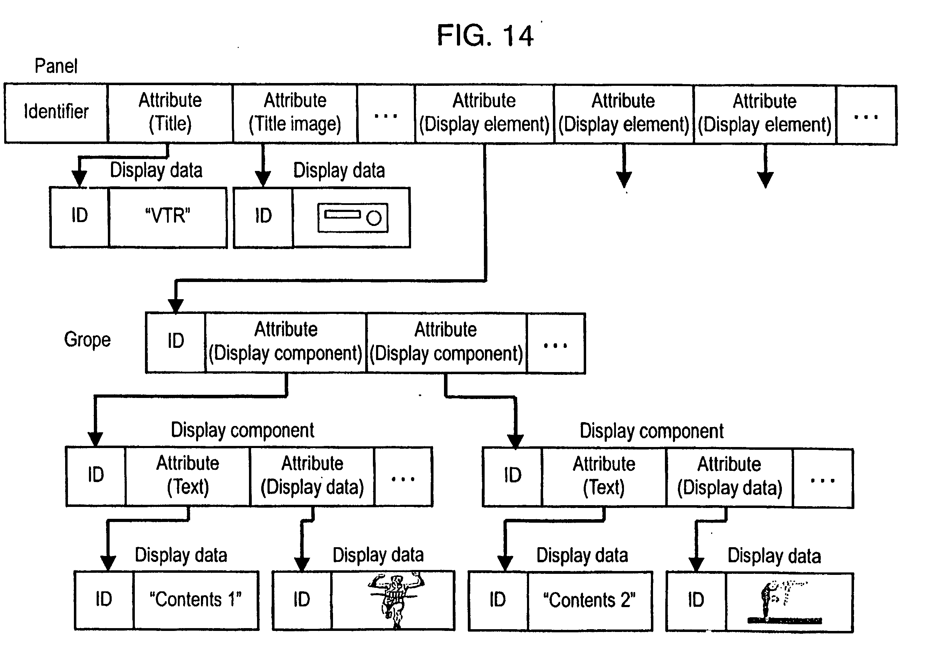

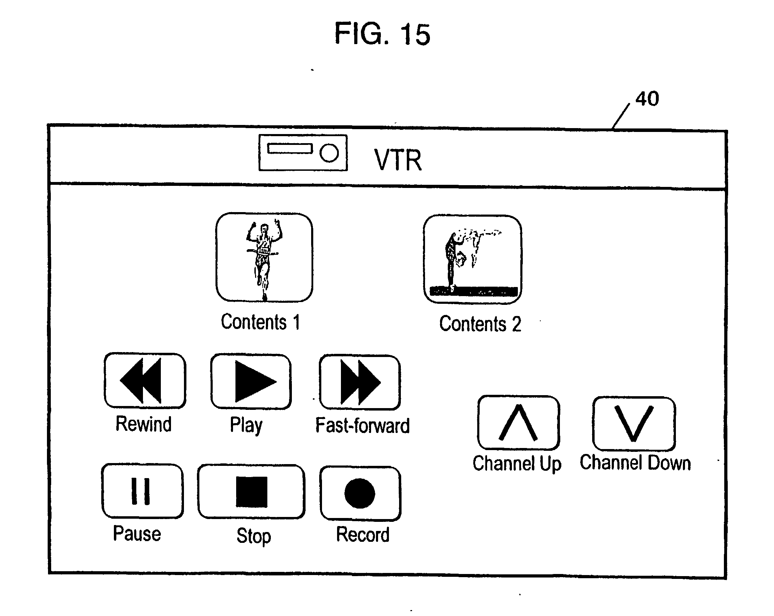

Fig. 14 is an explanatory diagram showing composition of operation screen information in the embodiment, and Fig. 15 shows a display example of operation screen by the controller.

In Fig. 14, one panel in the operation screen information shows the menu of VTR, and the title, opening image, background information, size and other original information, and linking to the group, that is, group identification information are included in the attribute information. This group shows the set of display parts depending on the function or display, and may be, for example, divided into three groups of contents, deck and tuner.

Each group has the group size, layout, background information and other original information, and linking to display part, that is, identification information of display part in the attribute information. Linking to the display part indicates the display part belonging to each group. The display parts include the icon, button, slider, check box , text entry and other parts, and the original information such as the size of display part, layout, state information, variable information, and linking to display data (identification information of display data) are included in the attribute information. Further, the display data is the display data of the panel, group or display part, further including still image data, moving image data, text data, audio data and program data.

Incidentally, the display parts such as slider, check box and text entry do not have display data, and the feature, function and operation are expressed as display parts, and the display may be designed to depend on the controller, or the display data may be composed of program codes including basic data such as still image data, audio data and text data. In the embodiment, the operation screen information has a hierarchical structure of list format, but not limited to list format, it may be also realized by table format, directory format or others, or the hierarchical structure may be replaced by other structure.

Fig. 15 is a display example of operation screen information shown in Fig. 14, in which reference numeral 40 is a controller screen. In the controller screen 40, the panel shown in Fig. 14 is displayed according to the attribute information of each display part.

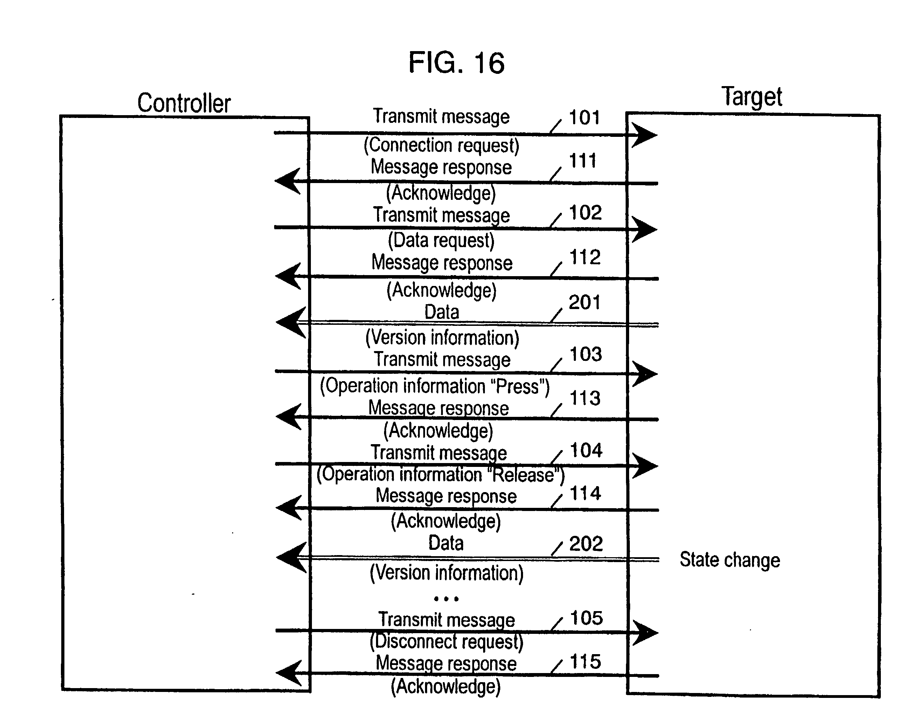

Fig. 16 shows an example of procedure when acquiring the operation screen information in the embodiment, and a case of transmitting operation screen information by a protocol other than the protocol for transmission and reception of message is explained below. (Hereinafter, the protocol for transmission and reception of message is called a first protocol, and the protocol for transmission and reception of operation screen information is called a second protocol.)
1. When the device is connected to the transmission line 1, the controller on this transmission line 1 (see Fig. 1) recognizes a new device by bus reset signal or the like, reads out the information of the device described in the apparatus composition information 7 (see Fig. 2) from the new device through the transmission line 1 according to the instruction from the application 9, and further reads the data object showing this device itself, such as text object or still image object, and then registers them in the application 9. The application 9, using the data object, displays a list of devices connected to this controller. When the user selects the still image object of the device by manipulating the remote controller or the like, the application 9 requests the operation screen information of the device, and reads in and stores in the panel (menu) of the device. At this time, the controller holds the resource in the controller necessary in the second protocol, and transmits the message 101 shown in Fig. 16, that is, by using the first protocol, the controller transmits the request for the connection. The device checks whether the connection is possible or not, and connects if possible. When the controller recognizes that the device has accepted by the message response 111, the controller connects itself, and the connection is established.
2. The controller transmits the data transmission request to the device by message transmission 102. As a response to this transmission, the device returns a message response 112, and transmits the operation screen information, for example, the data of panel (main menu) to the controller as data 201, by the second protocol. When the controller informs the device about the range of the information to be sent, the information out of the range, such as the information not presently displayed by the controller, is not sent to the controller and therefore the controller is not forced to process by receiving undesired data at the present, thereby enhancing the processing efficiency ofthe controller. Thus, the controller acquires all data of the panel, and displays on the screen.
3. When the user presses an operation part of the remote controller, for example, the cross button showing up, down, right, and left, the process unit 19 transmits the operation parts specifying information, and the state information of 1 ("press") of this operation part as message transmission 103 to the device as the operation information of the user. As its response, a message response 113 is sent from the device to the controller. This response usually shows that the message has been received normally, and the device judges whether or not to operate according to this message. When the user releases the operation part of the remote controller, the process unit 19 transmits the operation parts specifying information and action information "release" as the message transmission 104 to the device as the operation information of the user. As its response, a message response 114 is sent from the device to the controller. This response usually shows that the message has been received normally, and the device judges whether or not to operate according to this message.
4. When the state in the device is changed, and the operation screen information in the device is changed, the device transmits the changed data (for example, the display part in the operation screen information) as data 202 to the controller by using the second protocol. If the changed data is not one, but plural display parts are changed at once, the data for the plural display parts can be transmitted. Not only the changed data is transmitted according to the operation by the user, but also the changed data is sent automatically when the internal state of the device is changed. Therefore, the device updates the operation screen information at an arbitrary timing, and can transmit to the controller.
5. The application 9 displays the updated operation screen information. When the controller finishes the display of operation screen information of the device, the controller cuts itself from the connection, and transmits message 105 (connection cut-off request) to the device by the first protocol. The device judges whether adequate or not to cut off the connection, and if adequate, the connection is cut off. When the controller confirms by receiving message response 115 that the device accepts the connection cut-off, the controller releases the resource being held in the controller necessary by using the second protocol.

In this explanation, the connection is made when the controller displays the device information on the screen. However, while the device power source is being turned on, the connection may be always established. Or the connection may be established when the controller displays the GUI information such as a list of connected devices. It is the same when cutting off the connection. Alternatively, by adding the information showing the forced notice to the user in the identification information or attribute information of the data to be transmitted by the second protocol, it may be designed to be forced to display the screen or reproduce the audio when the controller receives this data. Thus, if the operation not permitted in the device is given, such as in the case of duplicate reservations of recording, or in the event of abnormality in the device such as entangling of the VTR tape, the user may be warned or instructed by the video, audio or other GUI information. Therefore, the user can promptly know the status of the device accurately. As the data used for this purpose, the on-screen display (OSD) data may be composed by using bit map of part or whole of the screen or text data, and it is displayed on the screen by the controller. The layout position on the controller screen may be determined by the controller itself. In this case, a proper size may be indicated at a proper position depending on the screen size or aspect ratio, and it may be noticed to the user. This data may be either the entire data of the operation screen information, or a panel designated by the message transmission 102. Of course, the operation screen information may be composed of one panel. The message responses 112, 113, and 114 may include the version information. In this case, the controller can acquire the version information of the operation screen information of the device before the operation screen information is read in or next data is requested, or before the device transmits the data, and the controller does not need to read the information again. Therefore, not required to update the data or update the screen by the controller, the controller processing is simple and fast, and the easy-to-see display screen is presented to the user. It is also possible to give a meaning to a specific value of the version information. For example, when the value of the version information is 0, it means this display part is invariable. That is, without adding information, an invariable display part and a variable display part can be handled. The controller processing is simplified, and the information quantity can be decreased.

In above explanation, the data for the display part is transmitted, but only the changed attribute information may be transmitted. In this case, together with the identification information of the changed display part, only the changed attribute information is transmitted. Similarly, if only the display data is changed, the display data only is transmitted to the controller. Thus, by transmitting the changed attribute information or display data only, the quantity of data is decreased, and the response is improved, so that the process of the device and controller may be curtailed.

Fig. 15 is an example of display of panel explained in Fig. 14 as a display example of operation screen information. Herein, each group is not displayed on the controller screen, but it may be also composed to display on the screen together with the group title and opening image.

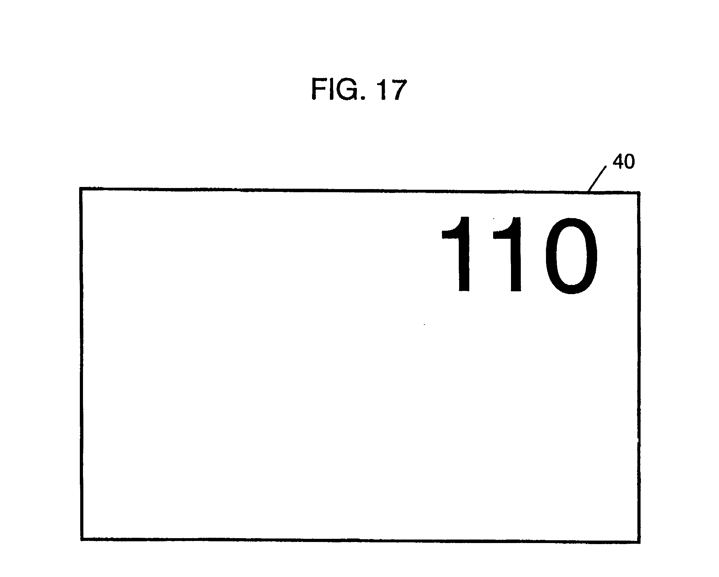

Fig. 17 shows other example of operation screen in the embodiment. Herein, the operation screen information is on-screen display (OSD) data composed of bit map data, and, for example, numerals "110" showing the channel number are transmitted from the device to the controller as bit map data in a translucent color background, and the controller displays the operation screen information on the screen 40 of the controller by overlaying on the stream data or the like received from the device. The controller, when displaying stream data from other device than the device acquiring the operation screen information on the screen 40, may change over the displayed stream data to the stream data of the device transmitting the operation screen information, and may display the operation screen information by overlaying on this stream data, or may display the operation screen information without changing over. In the transmission method of operation screen information, the message exchanged between the controller and device may be used, or a protocol different from the message may be used. Further, the device may overlay the operation screen information on the stream data, and the controller may display the overlaid stream data. Or, the controller may not display the operation screen information at all.

Also in the embodiment, the operation screen information is shown as visual data, but it may be audio data, and, for example, as the operation parts specifying information included in the operation information of the user, sound volume up/down may be defined, and the device receiving it may raise or lower the sound volume of the audio.

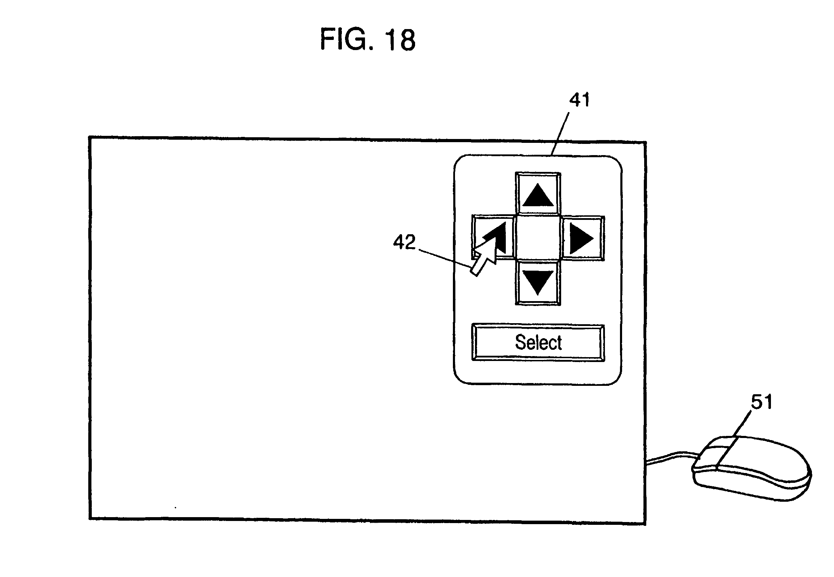

Fig. 18 shows a different example of operation screen in the embodiment. The application 9 in the controller displays the function of the remote controller 16 on the screen 40 in the form of GUI, and the user moves the mouse pointer 42 by using the mouse, and manipulates the remote controller 16 displayed on the screen 40 by using the operation part (for example, the button) on the mouse 51. The operation information of the user is processed in the controller instead of the remote controller signal, and is sequentially fed to the reception unit 17, operation determining unit 18, and process unit 19, and processed same as in Fig. 6. Thus, the remote controller 16 is not limited to the conventional remote controller, but may be realized by using the pointing device such as mouse or track ball, and the GUI, and the same effects are obtained in this case. The GUI presented by the controller is not limited to the device function only, but it may also include the function of the controller itself or the function of other device. The screen may also display together with the stream data and operation screen information presented by the device.

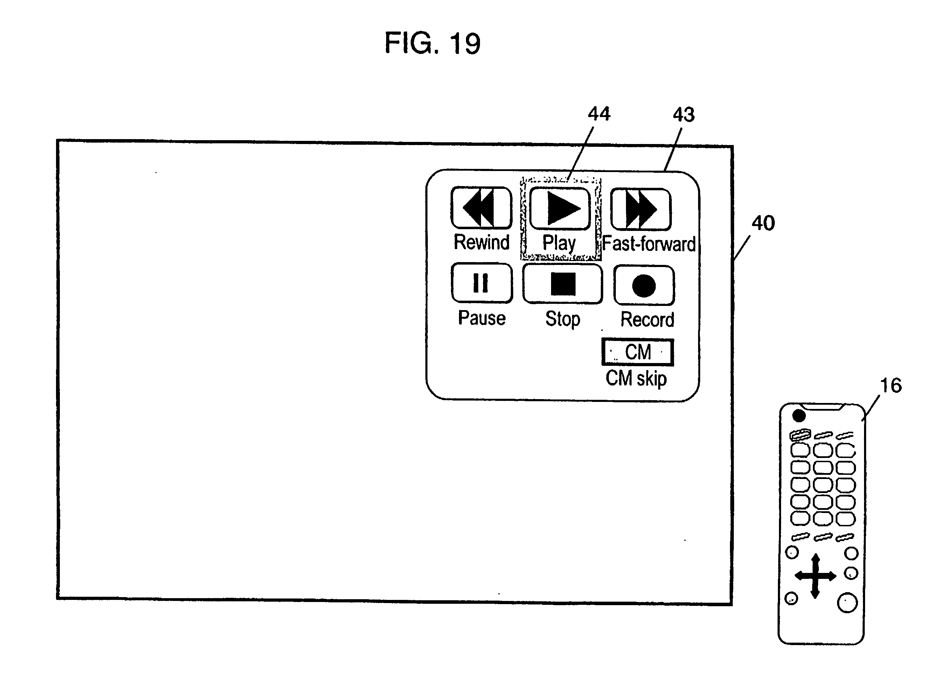

Fig. 19 shows a further different example of the operation screen in the embodiment. The application 9 in the controller displays the function not included in the controller remote controllerl6, out of the functions supported by the device, on the screen 40 in the form of GUI, and the user, using the mouse, can operate all functions of the device by using the GUI and remote controller displayed on the screen.

Herein, the remote controller 16 and the GUI on the screen 40 may be regarded as one controller remote controller, and their changeover is instructed, for example, by changing over button on the remote controller 16. That is, the application 9 preliminarily registers the operation corresponding to the changeover button in the process unit 19 so as to be transmitted to the application 9. When the user presses this changeover button, the operation information of the user is fed sequentially to the reception unit 17, operation determining unit 18, and process unit 19, and is further noticed to the application 9. Receiving this notice, the application 9 displays, for example, the GUI on the screen 40, and the cursor is displayed in the display part in this GUI, and sets so that the process unit 19 may transmit the operation of the user corresponding to the up, down, right, left buttons and select button on the remote controller 16 to itself (application 9). The user moves the cursor by the up, down, right and left buttons on the remote controller 16, and manipulates the display part indicated by the cursor by the select button. This operation information is noticed to the application 9, and the application 9 transmits, out of this operation information, the action information of the user, and the information for specifying the operation part corresponding to the display part indicated by the cursor by the GUI 43, to the process unit 19, and the process unit 19 requests the process unit 11 to transmit the message including such information as operation information to the device. When the user presses this changeover button again, the application 9 erases, for example, the GUI from the screen 40, and sets so that the process unit 19 may transmit the operation of the user corresponding to the up, down, right and left buttons and select button of the controller remote controller 16 to the device.

Thus, the device can be also controlled by using the GUI created by the controller, together with the controller remote controller 16, and the function of the device not found in the controller remote controller can be also manipulated by the remote controller of the controller. Depending on the operation parts specifying information instructed by the application, it is judged whether or not to transmit the information to the device. Thus, if the device has the functions that cannot be instructed by the operation parts on the controller remote controller only, the controller can present the GUI corresponding to such functions, and these functions can be operated by the user. Further, if the application displaying the operation screen information of the device and other application are working simultaneously on the controller, the operation information from the user can be appropriately acquired in each application, so that the operation information can be correctly presented to the device. The application has a function of changing over plural applications such as Windows system. The GUI presented by the controller is not limited to the functions of the device alone, but may include the functions of the controller itself and the functions of other device. In this case, both the stream data and the operation screen information presented by the device may be displayed on the screen.

As set forth above, according to the invention, the following network control system, and the controller and device using it can be realized.
1. Even if the product specification and signal standard of the remote controller of the apparatuses are different, the control object apparatus connected on the transmission line can be controlled correctly.
2. The user can instruct even the function not manipulated from the remote controller of the control object apparatus, or the function not provided in the remote controller of the controller.
3. The apparatus can be controlled correctly even in the case of manipulating the remote controller with different functions to be instructed depending on the operation duration, if one operation part has plural functions, or if other operation part is manipulated before completion of operation of one operation part.
4. If the duration for judging single press and long press differs between the controller and the device, the device can correctly judge the single press or long press.
5. The duration can be specified accurately, and the duration to be observed between apparatuses is definite, so that highly compatible apparatuses among makers can be manufactured.
6. The device can be controlled correctly if the controller remote controller signal determining duration cannot be set shorter than a predetermined duration due to manufacturing restrictions or the like.
7. If the device includes the functions that cannot be instructed only by the operation parts of the controller remote controller, the controller can present the GUI corresponding to these functions, and the apparatus can be controlled correctly by using them. If plural applications are working on the controller, an appropriate operation information can be acquired in each application, and the apparatus can be controlled correctly.

In the embodiment, the controller displays on its screen. But the same effects are obtained when the display unit is provided separately from the controller or device, and the user manipulates the controller by using the remote controller or the like while observing the screen display on this display unit.

## Claims

1. A network control system used in an audio-video computer system having plural apparatuses (21, 23, 31-35) for handling data relating to at least one of audio, video and information, composed in a network through a transmission line (1), said network control system comprising:
a) a controller having a remote controller (16), and
b) a device, which is included in the plural apparatuses, being an object to be controlled by said controller,
**characterised in that** when an operation part of the remote controller is operated, the remote controller transmits operation information to said controller based on a predetermined transmission duration and
said controller determines the operation of the operating part at a predetermined determining duration, creates an operation message corresponding to the determining result, transmits the operation message to the devices to be controlled at the predetermined determining duration via the transmission line, and
when the operation part is pressed, the operation message is a "press message" including "press" which is the operation information indicating the operation part is pressed, when the operation part is released, the operation message is a "release message" including "release" which is the operation information indicating that the operation part is released, and
the device to be controlled operates based on a time duration between a time when the press message is received and a time when the release message is received and based on the determining duration.

2. The network control system of claim 1, wherein said controller includes a graphic user interface,
said device to be controlled transmits an operation screen information of said device to be controlled to said controller, and said controller displays said operation screen information in said graphic user interface.

3. The network control system of claim 1, wherein,
at least one of the operation parts is an operation part performing a plurality of functions based on an operation duration thereof.

4. The network control system of any one of claims 1, 2 and 3, wherein said operation is either pressing or releasing of the operation part.

5. The network control system of any one of claims 1, 2 and 3, wherein said operation information includes either word "press" showing the operation part is pressed, or word "release" showing the operation part is released.

6. The network control system of any one of claims 1, 2 and 3, wherein said controller transmits operation part specifying information for specifying the operation part of said remote controller manipulated to the device to be controlled.

7. The network control system of any one of claims 1, 2 and 3, wherein the predetermined determining duration is longer than the duration for determining the signal received from the remote controller.

8. The network control system of any one of claims 1, 2 and 3, wherein said device to be controlled determines said operation of the operation part according to the operation message on the basis of said predetermined duration.

9. The network control system of any one of claims 1, 2 and 3, wherein said device to be controlled determines whether said operation of said user is single press or long press of the operation part of said remote controller (16), on the basis of said predetermined duration.

10. The network control system of any one of claims 1, 2 and 3, wherein said controller transmits plural messages to said device to be controlled, and said predetermined determining duration is a duration from a reception of a response (113) of a first message (103) including the press message until a transmission of a second message (104) including the release message.

11. The network control system of any one of claims 1, 2 and 3, wherein said controller transmits the release message (104) within the predetermined determining duration after transmitting the press message (103) when a determining duration in a signal received from the remote controller (16) is longer than said predetermined duration.

12. A device as an object to be controlled in a network control system used in an audio-video computer (AVC) system having plural apparatuses (21, 23, 31-35) for handling data relating to at least one of audio, video and information, composed in a network through a transmission line (1), and having a controller including a remote controller (12), said device to be controlled, which is included in the plural apparatuses, comprising:
a) a reception unit (2) receiving an operation message from the controller, and
b) a control unit(8) for determining the operation message received by the reception unit,
**characterised in that** a duration for receiving and transmitting is specified by a predetermined determining duration, and
the operation message includes a "press message" including "press" which is the operation information indicating that an operation part, which is provided with the remote controller, is pressed and a "release message" including "release" which is the operation information indicating that the operation part is released, and
the control unit (8) determines a duration from a time when the press message is received until the release message is received, based on the determining duration and the device to be controlled operates based on a time duration between a time when the press message is received and a time when the release message is received and based on the determining duration.

13. The device to be controlled of claim 12,
wherein said device to be controlled provides an operation screen information thereof to said controller to be controlled so that the operation information thereof is displayed on a graphic user interface of the controller.

14. The device to be controlled of claim 12,
wherein the remote controller has an operation part for executing plural functions depending on an operation duration, and
the device to be controlled executes one of said plural functions based on the operation duration.

15. The device to be controlled of any one of claims 12, 13 and 14, wherein said operation information includes either word "press" showing-the operation part is pressed, or word "release" showing the operation part is released.

16. The device of any one of claims 12, 13 and 14, wherein said reception unit (2) receives operation part specifying information for specifying an operation part of said remote controller manipulated.

17. The device of any one of claims 12, 13 and 14, wherein said device to be controlled determines said operation of the operation part according to the operation message on the basis of said predetermined determining duration.

18. The device to be controlled of any one of claims 12, 13 and 14, wherein the control unit determines whether said operation is a single press or a long press of the operation part, on the basis of said predetermined determining duration.

19. A controller in a network control system used in an audio-video computer system having plural apparatuses (21, 23, 31-35) for handling data relating to at least one of audio, video and information, composed in a network through a transmission line (1), and having a device as the control object, said controller comprising:
a) a remote controller (16) having an operation part, and
b) a reception unit (17) for receiving a signal from said remote controller,
**characterised in that** a duration for receiving and transmitting is specified by a predetermined determining duration, and
said remote controller (16) transmits an operation signal to said. reception unit (17) at a predetermined transmission duration, and
said controller determines the operation of the operating part at a predetermined determining duration, creates an operation message corresponding to the determining result, transmits the operation message to the devices to be controlled included in plural apparatuses at the predetermined determining duration via the transmission line, and
when the operation part is pressed, the operation message is a "press message" including "press" which is the operation information indicating the operation part is pressed, and
when the operation part is released, the operation message is a "release message" including "release" which is the operation information indicating the operation part is released and the device to be controlled operates based on a time duration between a time when the press message is received and a time when the release message is received and based on the determining duration.

20. The controller of claim 19,
wherein said controller includes a graphic user interface, receives an operation screen information of said device to be controlled via the transmission line (1), and displays the operation screen information.

21. A controller of claim 19,
wherein at least one of the operation parts performs a plurality of functions based on an operation duration thereof, and
the device to be controlled executes one of said plural functions based on the operation duration.

22. The controller of any one of claims 19, 20 and 21, wherein said operation is either pressing or releasing of the operation part.

23. The controller of any one of claims 19, 20 and 21, wherein said operation information includes either word "press" showing the operation part is pressed, or word "release" showing the operation part is released.

24. The controller of any one of claims 19, 20 and 21, wherein said operation information includes operation part specifying information for specifying the operation part of said remote controller manipulated.

25. The controller of any one of claims 19, 20 and 21, wherein said predetermined determining duration is longer than a duration for determining the signal received from the remote controller (16).

26. The controller of any one of claims 19, 20 and 21, wherein said controller transmits plural messages to said device to be controlled, and said predetermined determining duration is a duration from reception of response (113) of a first message (103) including the press message until transmission of a second message (104) including the release message.

27. The controller of any one of claims 19, 20 and 21, wherein said controller transmits the release message (104) within the predetermined determining duration after transmitting the press message (103) when a determining duration in a signal received from the remote controller (16) is longer than said predetermined duration.

28. The network control system of claim 6,
wherein said controller judges whether or not to transmit the information for specifying the operation part to said device to be controlled on the basis of the information for specifying the operation part, and, when transmitting, creates a message and the information for specifying the operation part and transmits said message and the information for specifying the operation part to said device, and
said device to be controlled operates according to the message and said information for specifying the operation part.

29. The controller of claim 24,
wherein said controller judges whether or not to transmit the information for specifying the operation part to said device to be controlled on the basis of the information for specifying the operation part, and, when transmitting, said controller transmits the operation message and the information for specifying the operation part to said device to be controlled.

30. The network control system of any one of claims 1, 2 and 3, wherein
the operation message is transmitted in accordance with an asynchronous data transmission protocol via the transmission network.

31. The device to be controlled of any one of claims 12, 13 and 14, wherein
said reception unit (2) receives the operation message in accordance with an asynchronous data transmission protocol.

32. The controller of any one of claims 19, 20 and 21, wherein said controller transmits the operation message to the device to be controlled in accordance with an asynchronous data transmission protocol via the transmission network.

33. The network control system of any one of claims 1, 2 and 3, wherein the controller transmits the message including "ON" to the device to be controlled.

34. The device to be controlled of any one of claims 12, 13 and 14, wherein the controller transmits the message including "ON" to the device to be controlled.

35. The controller of any one of claims 19, 20 and 21, wherein the controller transmits the message including "ON" to the device to be controlled.

## Patentansprüche

1. Netzwerksteuersystem, das in einem Audio-Video-Computersystem mit einer Vielzahl von Vorrichtungen (21, 23, 31-35) verwendet wird, zum Handhaben von Daten, die sich wenigstens auf Audio, Video oder Information beziehen, gebildet in einem Netzwerk durch eine Übertragungsleitung (1), wobei das Netzwerksteuersystem umfasst:
a) einen Controller mit einer Fernsteuerung (16), und
b) ein Gerät, das in der Vielzahl von Vorrichtungen enthalten und ein durch den Controller zu steuerndes Objekt ist,
**dadurch gekennzeichnet, dass**, wenn ein Betätigungsteil der Fernsteuerung betätigt wird, die Fernsteuerung Betätigungsinformation basierend auf einer vorbestimmten Übertragungszeitdauer an den Controller sendet, und
der Controller die Betätigung des Betätigungsteils in einer vorbestimmten Bestimmungszeitdauer bestimmt, eine Betätigungsnachricht, die dem Bestimmungsergebnis entspricht, erzeugt, die Betätigungsnachricht in der vorbestimmten Bestimmungszeitdauer über die Übertragungsleitung an die zu steuernden Geräte sendet, und
wenn der Betätigungsteil gedrück wird, die Betätigungsnachricht eine "Drücken-Nachricht" ist, die "Drücken" enthält, was die Betätigungsinformation ist, die angibt, dass der Betätigungsteil gedrückt wird, wenn der Betätigungsteil losgelassen wird, die Betätigungsnachricht eine "Loslassen-Nachricht" ist, die "Loslassen" enthält, was die Betätigungsinformation ist, die angibt, dass der Betätigungsteil losgelassen wird, und
das zu steuernde Gerät basierend auf einer Zeitdauer zwischen einer Zeit, wenn die Drücken-Nachricht empfangen wird, und einer Zeit, wenn die Loslassen-Nachricht empfangen wird, und basierend auf der Bestimmungszeitdauer arbeitet.

2. Netzwerksteuersystem nach Anspruch 1, wobei der Controller eine grafische Benutzerschnittstelle enthält,
das zu steuernde Gerät eine Betätigungsschirminformation des zu steuernden Gerätes an den Controller sendet und der Controller die Betätigungsschirminformation in der grafischen Benutzerschnittstelle anzeigt.

3. Netzwerksteuersystem nach Anspruch 1, wobei wenigstens einer der Betätigungsteile ein Betätigungsteil ist, der basierend auf einer Betätigungszeitdauer desselben eine Vielzahl von Funktionen durchführt.

4. Netzwerksteuersystem nach einem der Ansprüche 1,2 und 3, wobei die Betätigung entweder Drücken oder Loslassen des Betätigungsteils ist.

5. Netzwerksteuersystem nach einem der Ansprüche 1, 2 und 3, wobei die Betätigungsinformation entweder das Wort "Drücken", das angibt, dass der Betätigungsteil gedrückt wird, oder das Wort "Loslassen" enthält, das angibt, dass der Betätigungsteil losgelassen wird.

6. Netzwerksteuersystem nach einem der Ansprüche 1, 2 und 3, wobei der Controller Betätigungsteil-Spezifizierungsinformation zum Spezifizieren des Betätigungsteils der betätigten Fernsteuerung an das zu steuernde Gerät sendet.

7. Netzwerksteuersystem nach einem der Ansprüche 1, 2 und 3, wobei die vorbestimmte Bestimmungszeitdauer länger ist als die Zeitdauer zum Bestimmen des von der Fernsteuerung empfangenen Signals.

8. Netzwerksteuersystem nach einem der Ansprüche 1, 2 und 3, wobei das zu steuernde Gerät die Betätigung des Betätigungsteils entsprechend der Betätigungsnachricht auf der Basis der vorbestimmten Zeitdauer bestimmt.

9. Netzwerksteuersystem nach einem der Ansprüche 1, 2 und 3, wobei das zu steuernde Gerät auf der Basis der vorbestimmten Zeitdauer feststellt, ob die Betätigung des Benutzers ein einzelner Druck oder ein langer Druck des Betätigungsteils der Fernsteuerung (16) ist.

10. Netzwerksteuersystem nach einem der Ansprüche 1, 2 und 3, wobei der Controller eine Vielzahl von Nachrichten an das zu steuernde Gerät sendet, und die vorbestimmte Bestimmungszeitdauer eine Zeitdauer von einem Empfang einer Antwort (113) einer ersten Nachricht (103), die die Drücken-Nachricht enthält, bis zu einem Senden einer zweiten Nachricht (104), die die Loslassen-Nachricht enthält, ist.

11. Netzwerksteuersystem nach einem der Ansprüche 1, 2 und 3, wobei der Controller die Loslassen-Nachricht (104) in der vorbestimmten Bestimmungszeitdauer nach dem Senden der Drücken-Nachricht (103) sendet, wenn eine Bestimmungszeitdauer in einem von der Fernsteuerung (16) empfangenen Signal länger ist als die vorbestimmte Zeitdauer.

12. Gerät als ein zu steuerndes Objekt in einem Netzwerksteuersystem, das in einem Audio-Video-Computer- (AVC) System mit einer Vielzahl von Vorrichtungen (21, 23, 31-35) verwendet wird, zum Handhaben von Daten, die sich wenigstens auf Audio, Video oder Information beziehen, gebildet in einem Netzwerk durch eine Übertragungsleitung (1 ), und mit einem Controller, der eine Fernsteuerung (12) enthält, wobei das zusteuemde Gerät, das in der Vielzahl von Vorrichtungen enthalten ist, umfasst:
a) eine Empfangseinheit (2), die eine Betätigungsnachricht von dem Controller empfängt, und
b) eine Steuereinheit (8) zum Bestimmen der durch die Empfangseinheit empfangenen Betätigungsnachricht,
**dadurch gekennzeichnet, dass** eine Zeitdauer zum Empfangen und Senden durch eine vorbestimmte Bestimmungszeitdauer spezifiziert wird, und
die Betätigungsnachricht eine "Drücken-Nachricht", die "Drücken" enthält, was die Betätigungsinformation ist, die angibt, dass ein Betätigungsteil, der mit der Fernsteuerung bereitgestellt wird, gedrückt wird, und eine "Loslassen-Nachricht" enthält, die "Loslassen" enthält, was die Betätigungsinformation ist, die angibt, dass der Betätigungsteil losgelassen wird, und
die Steuereinheit (8) eine Zeitdauer von einer Zeit, wenn die Drücken-Nachricht empfangen wird, bis die Loslassen-Nachricht empfangen wird, basierend auf der Bestimmungszeitdauer bestimmt, und
das zu steuernde Gerät basierend auf einer Zeitdauer zwischen einer Zeit, wenn die Drücken-Nachricht empfangen wird, und einer Zeit, wenn die Loslassen-Nachricht empfangen wird, und basierend auf der Bestimmungszeitdauer arbeitet.

13. Zu steuerndes Gerät nach Anspruch 12, wobei das zu steuernde Gerät eine Betätigungsschirminformation desselben an den Controller liefert, um so gesteuert zu werden, dass die Betätigungsschirminformation desselben auf einer grafischen Benutzerschnittstelle des Controllers angezeigt wird.

14. Zu steuerndes Gerät nach Anspruch 12, wobei die Fernsteuerung einen Betätigungsteil zum Ausführen einer Vielzahl von Funktionen abhängig von einer Betätigungszeitdauer aufweist, und
das zu steuernde Gerät eine der Vielzahl von Funktionen basierend auf der Betätigungszeitdauer ausführt.

15. Zu steuerndes Gerät nach einem den Ansprüche 12, 13 und 14, wobei die Betätigungsinformation entweder das Wort "Drücken", das angibt, dass der Betätigungsteil gedrückt wird, oder das Wort "Loslassen" enthält, das angibt, dass der Betätigungsteil losgelassen wird.

16. Zu steuerndes Gerät nach einem den Ansprüche 12, 13 und 14, wobei die Empfangseinheit (2) Betätigungsteil-Spezifizierungsinformation zum Spezifizieren eines Betätigungsteils der betätigten Fernsteuerung empfängt.

17. Zu steuerndes Gerät nach einem den Ansprüche 12, 13 und 14, wobei das zu steuernde Gerät die Betätigung des Betätigungsteils entsprechend der Betätigungsnachricht auf der Basis der vorbestimmten Bestimmungszeitdauer bestimmt.

18. Zu steuerndes Gerät nach einem den Ansprüche 12, 13 und 14, wobei die Steuereinheit auf der Basis der vorbestimmten Bestimmungszeitdauer feststellt, ob die Betätigung ein einzelner Druck oder ein langer Druck des Betätigungsteils ist.

19. Controller in einem Netzwerksteuersystem, das in einem Audio-Video-Computersystem mit einer Vielzahl von Vorrichtungen (21, 23, 31-35) verwendet wird, zum Handhaben von Daten, die sich wenigstens auf Audio, Video oder Information beziehen, gebildet in einem Netzwerk durch eine Übertragungsleitung (1), und mit einem Gerät als das Steuerobjekt, wobei der Controller umfasst:
a) eine Fernsteuerung (16) mit einem Betätigungsteil, und
b) eine Empfangseinheit (17) zum Empfangen eines Signals von der Fernsteuerung,
**dadurch gekennzeichnet, dass** eine Zeitdauer zum Empfangen und Senden durch eine vorbestimmte Besümmungszeitdauer spezifiziert wird, und
die Fernsteuerung (16) ein Betätigungssignal in einer vorbestimmten Übertragungszeitdauer an die Empfangseinheit (17) sendet, und
der Controller die Betätigung des Betätigungsteils in einer vorbestimmten Bestimmungszeitdauer bestimmt, eine Betätigungsnachricht, die dem Bestimmungsergebnis entspricht, erzeugt, die Betätigungsnachricht in der vorbestimmten Bestimmungszeitdauer über die Übertragungsleitung an die in der Vielzahl von Vorrichtungen enthaltenen zu steuernden Geräte sendet, und
wenn der Betätigungsteil gedrück wird, die Betätigungsnachricht eine "Drücken-Nachricht" ist, die "Drücken" enthält, was die Betätigungsinformation ist, die angibt, dass der Betätigungsteil gedrückt wird, und
wenn der Betätigungsteil losgelassen wird, die Betätigungsnachricht eine "Loslassen-Nachricht" ist, die "Loslassen" enthält, was die Betätigungsinformation ist, die angibt, dass der Betätigungsteil losgelassen wird, und
das zu steuernde Gerät basierend auf einer Zeitdauer zwischen einer Zeit, wenn die Drücken-Nachricht empfangen wird, und einer Zeit, wenn die Loslassen-Nachricht empfangen wird, und basierend auf der Bestimmungszeitdauer arbeitet.

20. Controller nach Anspruch 19, wobei der Controller eine grafische Benutzerschnittstelle enthält, eine Betätigungsschirminformation des zu steuernden Gerätes über die Übertragungsleitung (1) empfängt und die Betätigungsschirminformation anzeigt.

21. Controller nach Anspruch 19, wobei wenigstens einer der Betätigungsteile eine Vielzahl von Funktionen basierend auf einer Betätigungszeitdauer desselben durchführt, und
das zu steuernde Gerät eine der Vielzahl von Funktionen basierend auf der Betätigungszeitdauer ausführt.

22. Controller nach einem der Ansprüche 19, 20 und 21, wobei die Betätigung entweder Drücken oder Loslassen des Betätigungsteils ist.

23. Controller nach einem der Ansprüche 19, 20 und 21, wobei die Betätigungsinformation entweder das Wort "Drücken", das angibt, dass der Betätigungsteil gedrückt wird, oder das Wort "Loslassen" enthält, das angibt, dass der Betätigungsteil losgelassen wird.

24. Controller nach einem der Ansprüche 19, 20 und 21, wobei die Betätigungsinformation Betätigungsteil-Spezifizierungsinformation zum Spezifizieren des Betätigungsteils der betätigten Fernsteuerung enthält.

25. Controller nach einem der Ansprüche 19, 20 und 21, wobei die vorbestimmte Bestimmungszeitdauer länger ist als eine Zeitdauer zum Bestimmen des von der Fernsteuerung (16) empfangenen Signals.

26. Controller nach einem der Ansprüche 19, 20 und 21, wobei der Controller eine Vielzahl von Nachrichten an das zu steuernde Gerät sendet, und die vorbestimmte Bestimmungszeitdauer eine Zeitdauer vom Empfangen einer Antwort (113) einer ersten Nachricht (103), die die Drücken-Nachricht enthält, bis zum Senden einer zweiten Nachricht (104), die die Loslassen-Nachricht enthält, ist.

27. Controller nach einem der Ansprüche 19, 20 und 21, wobei der Controller die Loslassen-Nachricht (104) in der vorbestimmten Bestimmungszeitdauer nach dem Senden der Drücken-Nachricht (103) sendet, wenn eine Bestimmungszeitdauer in einem von der Fernsteuerung (16) empfangenen Signal länger ist als die vorbestimmte Zeitdauer.

28. Netzwerksteuersystem nach Anspruch 6, wobei der Controller auf der Basis der Information zum Spezifizieren des Betätigungsteils entscheidet, ob die Information zum Spezifizieren des Betätigungsteils an das zu steuernde Gerät zu senden ist oder nicht, und, wenn zu senden, eine Nachricht und die Information zum Spezifizieren des Betätigungsteils erzeugt und die Nachricht und die Information zum Spezifizieren des Betätigungsteils an das Gerät sendet, und
das zu steuernde Gerät entsprechend der Nachricht und der Information zum Spezifizieren des Betätigungsteils arbeitet.

29. Controller nach Anspruch 24, wobei der Controller auf der Basis der information zum Spezifizieren des Betätigungsteils entscheidet, ob die information zum Spezifizieren des Betätigungsteiis an das zu steuernde Gerät zu senden ist oder nicht, und, wenn zu senden, der Controller die Betätigungsnachricht und die Information zum Spezifizieren des Betätigungsteils an das zu steuernde Gerät sendet.

30. Netzwerksteuersystem nach einem der Ansprüche 1, 2 und 3, wobei die Betätigungsnachricht entsprechend einem Asynchron-Datenübertragungsprotokoll über das Übertragungsnetzwerk gesendet wird.

31. Zu steuerndes Gerät nach einem der Anprüche 12, 13 und 14, wobei die Empfangseinheit (2) die Betätigungsnachricht entsprechend einem Asynchron-Datenübertragungsprotokoll empfängt.

32. Controller nach einem der Ansprüche 19, 20 und 21, wobei der Controller die Betätigungsnachricht entsprechend einem Asynchron-Datenübertragungsprotokoll über das Übertragungsnetzwerk an das zu steuernde Gerät sendet.

33. Netzwerksteuersystem nach einem der Ansprüche 1, 2 und 3, wobei der Controller die Nachricht, die "ON" enthält, an das zu steuernde Gerät sendet.

34. Zu steuerndes Gerät nach einem der Anprüche 12, 13 und 14, wobei der Controller die Nachricht, die "ON" enthält, an das zu steuernde Gerät sendet.

35. Controller nach einem der Ansprüche 19, 20 und 21, wobei der Controller die Nachricht, die "ON" enthält, an das zu steuernde Gerät sendet.

## Revendications

1. Un système de commande de réseau utilisé dans un système informatique audio - vidéo ayant de multiples appareils (21, 23, 31-35) pour manipuler des données concernant au moins une catégorie parmi des données audio, vidéo et d'information, organisés en un réseau au moyen d'une ligne de transmission (1), ce système de commande de réseau comprenant :
a) une unité de commande ayant une unité de télécommande (16), et
b) un dispositif, qui est inclus dans les multiples appareils, qui est un objet à commander par l'unité de commande,
**caractérisé en ce que** lorsqu'une section d'actionnement de l'unité de télécommande est actionnée, l'unité de télécommande émet une information d'actionnement vers l'unité de commande sur la base d'une durée de transmission prédéterminée, et
l'unité de commande détermine l'actionnement de la section d'actionnement au cours d'une durée de détermination prédéterminée, crée un message d'actionnement correspondant au résultat de détermination, émet le message d'actionnement vers les dispositifs à commander au cours de la durée de détermination prédéterminée, par l'intermédiaire de la ligne de transmission, et
lorsqu'une pression est exercée sur la section d'actionnement, le message d'actionnement est un "message de pression" incluant "pression" qui est l'information d'actionnement indiquant qu'une pression est exercée sur la section d'actionnement, et lorsque la section d'actionnement est relâchée, le message d'actionnement est un "message de relâchement" incluant "relâchement" qui est l'information d'actionnement indiquant que la section d'actionnement est relâchée, et
le dispositif à commander fonctionne sur la base d'une durée entre un instant auquel le message de pression est reçu et un instant auquel le message de relâchement est reçu, et sur la base de la durée de détermination.

2. Le système de commande de réseau de la revendication 1, dans lequel l'unité de commande comprend une interface graphique d'utilisateur,
le dispositif à commander émet vers l'unité de commande une information d'écran d'actionnement de ce dispositif à commander, et l'unité de commande visualise cette information d'écran d'actionnement dans l'interface graphique d'utilisateur.

3. Le système de commande de réseau de la revendication 1, dans lequel,
l'une au moins des sections des sections d'actionnement est une section d'actionnement accomplissant une multiplicité de fonctions sur la base d'une durée d'actionnement de celle-ci.

4. Le système de commande de réseau de l'une quelconque des revendication 1, 2 et 3, dans lequel l'actionnement consiste à presser ou à relâcher la section d'actionnement.

5. Le système de commande de réseau de l'une quelconque des revendication 1, 2 et 3, dans lequel l'information d'actionnement comprend soit le mot "pression" montrant qu'une pression est exercée sur la section d'actionnement, soit le mot "relâchement" montrant que la section d'actionnement est relâchée.

6. Le système de commande de réseau de l'une quelconque des revendication 1, 2 et 3, dans lequel l'unité de commande émet vers le dispositif à commander une information de spécification de section d'actionnement pour spécifier la section d'actionnement de l'unité de télécommande qui est manipulée.

7. Le système de commande de réseau de l'une quelconque des revendication 1, 2 et 3, dans lequel la durée de détermination prédéterminée est plus longue que la durée pour déterminer le signal reçu de l'unité de télécommande.

8. Le système de commande de réseau de l'une quelconque des revendication 1, 2 et 3, dans lequel le dispositif à commander détermine l'actionnement de la section d'actionnement conformément au message d'actionnement, sur la base de la durée prédéterminée.

9. Le système de commande de réseau de l'une quelconque des revendication 1, 2 et 3, dans lequel le dispositif à commander détermine si l'actionnement de l'utilisateur est une pression unique ou une longue pression de la section d'actionnement de l'unité de télécommande (16), sur la base de la durée prédéterminée.

10. Le système de commande de réseau de l'une quelconque des revendication 1, 2 et 3, dans lequel l'unité de commande émet plusieurs messages vers le dispositif à commander, et la durée de détermination prédéterminée est une durée depuis une réception d'une réponse (113) à un premier message (103) incluant le message de pression, jusqu'à une émission d'un second message (104) incluant le message de relâchement.

11. Le système de commande de réseau de l'une quelconque des revendication 1, 2 et 3, dans lequel l'unité de commande émet le message de relâchement (104) pendant la durée de détermination prédéterminée après l'émission du message de pression (103), lorsqu'une durée de détermination dans un signal reçu de l'unité de télécommande (16) est plus longue que la durée prédéterminée.

12. Un dispositif constituant un objet à commander dans un système de commande de réseau utilisé dans un système informatique audio - vidéo (AVC) ayant de multiples appareils (21, 23, 31-35) pour manipuler des données concernant au moins une catégorie parmi des données audio, vidéo et d'information, organisés en un réseau au moyen d'une ligne de transmission (1), et ayant une unité de commande incluant une unité de télécommande (12), le dispositif à commander, qui est inclus dans les multiples appareils, comprenant :
a) une unité de réception (2) recevant un message d'actionnement provenant de l'unité de commande, et
b) une section de commande (8) pour déterminer le message d'actionnement reçu par l'unité de réception,
**caractérisé en ce qu'**une durée pour recevoir et émettre est spécifiée par une durée de détermination prédéterminée, et
le message d'actionnement comprend un "message de pression" incluant "pression" qui est l'information d'actionnement indiquant qu'une section d'actionnement, qui est incorporée dans l'unité de télécommande, est pressée, et un "message de relâchement" incluant "relâchement" qui est l'information d'actionnement indiquant que la section d'actionnement est relâchée, et
La section de commande (8) détermine une durée depuis un instant auquel le message de pression est reçu, jusqu'à ce que le message de relâchement soit reçu, sur la base de la durée de détermination, et le dispositif à commander fonctionne sur la base d'une durée entre un instant auquel le message de pression est reçu et un instant auquel le message de relâchement est reçu, et sur la base de la durée de détermination.

13. Le dispositif à commander de la revendication 12,
dans lequel ce dispositif à commander fournit à l'unité de commande une information d'écran d'actionnement le concernant, pour qu'il soit commandé de façon que son information d'actionnement soit visualisée sur une interface graphique d'utilisateur de l'unité de commande.

14. Le dispositif à commander de la revendication 12,
dans lequel l'unité de télécommande a une section d'actionnement pour exécuter de multiples fonctions sous la dépendance d'une durée d'actionnement, et
le dispositif à commander exécute l'une des multiples fonctions sur la base de la durée d'actionnement.

15. Le dispositif à commander de l'une quelconque des revendications 12, 13 et 14, dans lequel l'information d'actionnement comprend soit le mot "pression" montrant que la section d'actionnement est pressée, soit le mot "relâchement" montrant que la section d'actionnement est relâchée.

16. Le dispositif à commander de l'une quelconque des revendications 12, 13 et 14, dans lequel l'unité de réception (2) reçoit une information de spécification de section d'actionnement pour spécifier une section d'actionnement de l'unité de télécommande qui est manipulée.

17. Le dispositif à commander de l'une quelconque des revendications 12, 13 et 14, dans lequel le dispositif à commander détermine l'actionnement de la section d'actionnement d'après le message d'actionnement, sur la base de la durée de détermination prédéterminée.

18. Le dispositif à commander de l'une quelconque des revendications 12, 13 et 14, dans lequel la section de commande détermine si l'actionnement est une pression unique ou une longue pression de la section d'actionnement, sur la base de la durée de détermination prédéterminée.

19. Une unité de commande dans un système de commande de réseau utilisé dans un système informatique audio - vidéo ayant de multiples appareils (21, 23, 31-35) pour manipuler des données concernant au moins une catégorie parmi des données audio, vidéo et d'information, organisés en un réseau au moyen d'une ligne de transmission (1), et ayant un dispositif constituant l'objet de commande, cette unité de commande comprenant :
a) une unité de télécommande (16) ayant une section d'actionnement, et
b) une unité de réception (17) pour recevoir un signal provenant de l'unité de télécommande,
**caractérisée en ce qu'**une durée pour recevoir et émettre est spécifiée par une durée de détermination prédéterminée, et
l'unité de télécommande (16) émet un signal d'actionnement vers l'unité de réception (17) au cours d'une durée d'émission prédéterminée, et
l'unité de commande détermine l'actionnement de la section d'actionnement au cours d'une durée de détermination prédéterminée, crée un message d'actionnement correspondant au résultat de détermination, émet le message d'actionnement vers les dispositifs à commander inclus dans de multiples appareils, dans la durée de détermination prédéterminée, par l'intermédiaire de la ligne de transmission, et
lorsque la section d'actionnement est pressée, le message d'actionnement est un "message de pression" incluant "pression" qui est l'information d'actionnement indiquant que la section d'actionnement est pressée, et
lorsque la section d'actionnement est relâchée, le message d'actionnement est un "message de relâchement" incluant "relâchement" qui est l'information d'actionnement indiquant que la section d'actionnement est relâchée, et le dispositif à commander fonctionne sur la base d'une durée entre un instant auquel le message de pression est reçu et un instant auquel le message de relâchement est reçu, et sur la base de la durée de détermination.

20. L'unité de commande de la revendication 19,
dans laquelle l'unité de commande comprend une interface graphique d'utilisateur, reçoit une information d'écran d'actionnement du dispositif à commander, par l'intermédiaire de la ligne de transmission (1), et visualise l'information d'écran d'actionnement.

21. Une unité de commande de la revendication 19,
dans laquelle au moins une des sections d'actionnement accomplit une multiplicité de fonctions sur la base d'une durée d'actionnement de celle-ci, et
le dispositif à commander exécute l'une des multiples fonctions sur la base de la durée d'actionnement.

22. L'unité de commande de l'une quelconque des revendications 19, 20 et 21, dans laquelle l'actionnement consiste à presser ou à relâcher la section d'actionnement.

23. L'unité de commande de l'une quelconque des revendications 19, 20 et 21, dans laquelle l'information d'actionnement comprend soit le mot "pression" montrant que la section d'actionnement est pressée, soit le mot "relâchement" montrant que la section d'actionnement est relâchée.

24. L'unité de commande de l'une quelconque des revendications 19, 20 et 21, dans laquelle l'information d'actionnement comprend une information de spécification de section d'actionnement pour spécifier la section d'actionnement de l'unité de télécommande qui est manipulée.

25. L'unité de commande de l'une quelconque des revendications 19, 20 et 21, dans laquelle la durée de détermination prédéterminée est plus longue qu'une durée pour déterminer le signal reçu de l'unité de télécommande (16).

26. L'unité de commande de l'une quelconque des revendications 19, 20 et 21, dans laquelle l'unité de commande émet plusieurs messages vers le dispositif à commander, et la durée de détermination prédéterminée est une durée à partir de la réception d'une réponse (113) à un premier message (103) incluant le message de pression, jusqu'à l'émission d'un second message (104) incluant le message de relâchement.

27. L'unité de commande de l'une quelconque des revendications 19, 20 et 21, dans laquelle l'unité de commande émet le message de relâchement (104) au cours de la durée de détermination prédéterminée après l'émission du message de pression (103), lorsqu'une durée de détermination dans un signal reçu de l'unité de télécommande (16) est plus longue que la durée prédéterminée.

28. Le système de commande de réseau de la revendication 6,
dans lequel l'unité de commande juge s'il faut émettre ou non vers le dispositif à commander l'information pour spécifier la section d'actionnement, sur la base de l'information pour spécifier la section d'actionnement, et lorsqu'elle émet, elle crée un message et l'information pour spécifier la section d'actionnement, et émet vers ledit dispositif le message et l'information pour spécifier la section d'actionnement, et
le dispositif à commander fonctionne conformément au message et à l'information pour spécifier la section d'actionnement.

29. L'unité de commande de la revendication 24,
dans laquelle l'unité de commande juge s'il faut émettre ou non vers le dispositif à commander l'information pour spécifier la section d'actionnement, sur la base de l'information pour spécifier la section d'actionnement, et lorsqu'elle émet, l'unité de commande émet le message d'actionnement et l'information pour spécifier la section d'actionnement, et émet vers le dispositif à commander le message d'actionnement et l'information pour spécifier la section d'actionnement.

30. Le système de commande de réseau de l'une quelconque des revendications 1, 2 et 3, dans lequel
le message d'actionnement est émis conformément à un protocole de transmission de données asynchrone, par l'intermédiaire du réseau de transmission.

31. Le dispositif à commander de l'une quelconque des revendications 12, 13 et 14, dans lequel
l'unité de réception (2) reçoit le message d'actionnement conformément à un protocole de transmission de données asynchrone.

32. L'unité de commande de l'une quelconque des revendications 19, 20 et 21, dans laquelle l'unité de commande émet le message d'actionnement vers le dispositif à commander conformément à un protocole de transmission de données asynchrone, par l'intermédiaire du réseau de transmission.

33. Le système de commande de réseau de l'une quelconque des revendications 1, 2 et 3, dans lequel l'unité de commande émet vers le dispositif à commander le message incluant "MARCHE".

34. Le dispositif à commander de l'une quelconque des revendications 12, 13 et 14, dans lequel l'unité de commande émet vers le dispositif à commander le message incluant "MARCHE".

35. L'unité de commande de l'une quelconque des revendications 19, 20 et 21, dans laquelle l'unité de commande émet vers le dispositif à commander le message incluant "MARCHE".
